# FASCICULE DE BREVET EUROPEEN

(11) **EP 2 212 583 B1**
(45) Date de publication et mention de la délivrance du brevet: **20.07.2011**
(21) Numéro de dépôt: 08851959.0
(22) Date de dépôt: 24.10.2008
(51) Int. Cl.: F16F 15/08, F16F 1/36, B64G 1/38, F16F 3/087

(54) **DISPOSITIF MODULAIRE D'ISOLATION MULTI-AXES DE VIBRATIONS ET DE CHOCS, A BASE D'ELASTOMERE**
AUF ELASTOMER BASIERENDE MODULARE VORRICHTUNG FÜR MEHRACHSIGE ISOLIERUNG GEGEN VIBRATION UND STOSSWIRKUNG
MODULAR DEVICE FOR MULTI-AXIAL INSULATION AGAINST VIBRATION AND IMPACTS, BASED ON ELASTOMER

(30) Priorité: 22.11.2007 FR 0708197
(43) Date de publication de la demande: 04.08.2010
(73) Titulaire: Astrium SAS, 75016 Paris (FR)
(72) Inventeur: CAMARASA, Patrick, B-31320 Rebigue (FR)
(74) Mandataire: Cabinet Plasseraud
(86) Numéro de dépôt international: PCT/FR2008/051928
(87) Numéro de publication internationale: WO 2009/066045

(56) Documents cités:
- EP-A- 0 539 930
- EP-A- 0 848 186
- WO-A-2007/077350
- JP-A- 2001 140 984

## Description

La présente invention concerne un dispositif d'isolation multi-axes des vibrations engendrées par un équipement vibrant et transmises à une structure porteuse de cet équipement, comme, par exemple, dans le cas où l'équipement vibrant comprend au moins un élément tournant et/ou déplacé en translation périodique, le terme isolation devant être compris au sens d'au moins une atténuation par des éléments placés en série entre la source de vibrations, qui est l'équipement vibrant, et le support à isoler, qui est la structure porteuse.

Le dispositif d'isolation doit également, dans certains cas, remplir une autre fonction, a priori antagoniste à celle présentée ci-dessus, et qui est d'atténuer des charges dynamiques, telles que vibrations et chocs, importantes et transitoires appliquées à la structure porteuse, et se propageant à travers le dispositif d'isolation jusqu'à l'équipement, éventuellement sensible à ces charges.

Pour faciliter la compréhension de l'invention, celle-ci est décrite ci-après plus particulièrement dans le cadre de certaines applications liées au secteur spatial, et pour lesquelles l'invention présente un intérêt particulier pour le déposant.

Il est bien connu que certains actionneurs, couramment utilisés pour le contrôle d'attitude de satellites, possèdent un ou des éléments tournants, dont l'équilibrage toujours imparfait dans la pratique génère des vibrations se propageant à travers la structure du satellite. C'est le cas, par exemple, des roues de réaction, roues cinétiques, gyrodynes (appelés également actionneurs gyroscopiques ou CMG dans la littérature), roues à stockage d'énergie, etc.

D'autres équipements embarqués à bord des satellites peuvent engendrer également de telles vibrations, comme par exemple des générateurs de froid à base de compresseurs.

Les vibrations créées par ces équipements peuvent se transmettre jusqu'à des charges utiles des satellites et dégrader leurs performances, comme c'est le cas, par exemple, pour des instruments d'observation optique particulièrement sensibles aux bougés de la ligne de visée préjudiciables à la qualité des images obtenues.

Pour contrecarrer ces effets dommageables, selon l'état de la technique, l'équipement perturbateur ou un ensemble d'équipements perturbateurs est monté sur un dispositif d'isolation constituant une interface de montage de l'équipement ou ensemble d'équipements sur la structure porteuse. Outre cette fonction de montage, le dispositif d'isolation doit atténuer la transmission des vibrations générées par au moins un équipement selon un certain gabarit fréquentiel dépendant de l'utilisation. Dans le cas où au moins un équipement est un actionneur en couple ou en force, le dispositif d'isolation doit également transmettre les couples ou forces utiles générés par cet équipement selon un gabarit fréquentiel de transmissibilité spécifié également par l'utilisateur. De plus, il est souhaité, sinon nécessaire, également que le dispositif d'isolation atténue les charges dynamiques très fortes appliquées sur la structure porteuse lors de la phase de lancement du satellite, ce qui semble contradictoire avec la fonction d'isolation des vibrations d'au moins un équipement, ces vibrations étant de plusieurs ordres de grandeur inférieures aux charges dynamiques au lancement.

Le dispositif d'isolation selon l'invention doit donc fonctionnel :
- au sol, en particulier pendant les essais de performances et les essais de qualification effectués avant le lancement du satellite,
- pendant le lancement du satellite, dans des environnements vibratoires, acoustiques et de chocs particulièrement difficiles, et
- lorsque le satellite est en orbite, où les performances d'isolation de très petites vibrations devront atteindre les niveaux attendus.

Enfin, le dispositif d'isolation selon l'invention doit également parfois maintenir au cours du temps une certaine stabilité d'alignement du ou des équipements vibrants par rapport à la structure porteuse.

Les valeurs numériques suivantes correspondent à une plage de fonctionnement typique d'une réalisation particulière du dispositif de l'invention lorsqu'il est appliqué à l'isolation d'actionneurs de type roues de réaction ou gyrodyhes à bord de satellites :
- masse d'un équipement vibrant à isoler: typiquement de 1 kg à 30 kg ;
- forces et couples perturbateurs engendrés par l'équipement vibrant: 1N à 100N sur une plage fréquentielle de 10Hz à 1000Hz ;
- facteur d'atténuation recherché en vibrations et chocs : 3 à 50 dans la plage 10Hz à 1000 Hz (typiquement une atténuation en pente -2 en échelle logarithmique dans le domaine fréquentiel) ;
- facteur de surtension du dispositif d'isolation : inférieur à 2 ;
- facteur de transmissibilité recherché : 1 ± 5% dans la plage 0 à 10 Hz ;
- stabilité d'alignement dans le temps : pouvant aller jusqu'à typiquement 0.05° ;
- environnement au lancement : typiquement 20-100g dans la gamme 10-100 Hz (vibrations) et 1000g dans la gamme 100-1000Hz (chocs)(g étant l'accélération du champ de gravité terrestre).

A ce point du mémoire descriptif, il faut noter que le dispositif proposé par l'invention et qui est présenté ci-dessous peut servir également à isoler non pas un seul équipement, mais par exemple un ensemble d'équipements dont au moins un est perturbateur car vibrant, tous montés sur un même plateau porte-équipements. Le dispositif d'isolation selon l'invention peut également être utilisé en interface et servir à isoler une partie d'un satellite, par exemple un module de service, d'une autre partie du satellite, par exemple une charge utile. Dans ces deux cas, les valeurs numériques ci-dessus, données à titre indicatif, ne sont pas forcément applicables.

Par WO 2007/077350 du demandeur correspondant au préambule de la revendication indépendante 1, on connaît des dispositifs d'isolation multi-axes d'au moins un équipement générateur de vibrations, embarqué sur une structure porteuse, et qui comprend au moins trois, et typiquement quatre modules d'isolation répartis à la périphérie dudit équipement vibrant ou d'un support de ce dernier, et tel que chaque module d'isolation comporte deux pièces rigides dont l'une, dite pièce externe, est destinée à être fixée à la structure porteuse, et l'autre, dite pièce interne, est destinée à être fixée audit équipement vibrant ou à son support, lesdites pièces interne et externe étant reliées l'une à l'autre par au moins un plot d'isolation en élastomère, atténuant par sa déformation suivant au moins un de ses axes en traction, compression ou cisaillement, la transmission de vibrations de faible amplitude générées par ledit équipement, chaque module d'isolation comprenant également une butée souple latérale (ou radiale), et deux butées souples longitudinales, actives en sens opposés, chaque butée souple étant montée sur l'une seulement des pièces interne et externe, et ayant une extrémité libre en vis-à-vis de l'autre desdites pièces interne et externe et sans contact avec ladite autre pièce au repos.

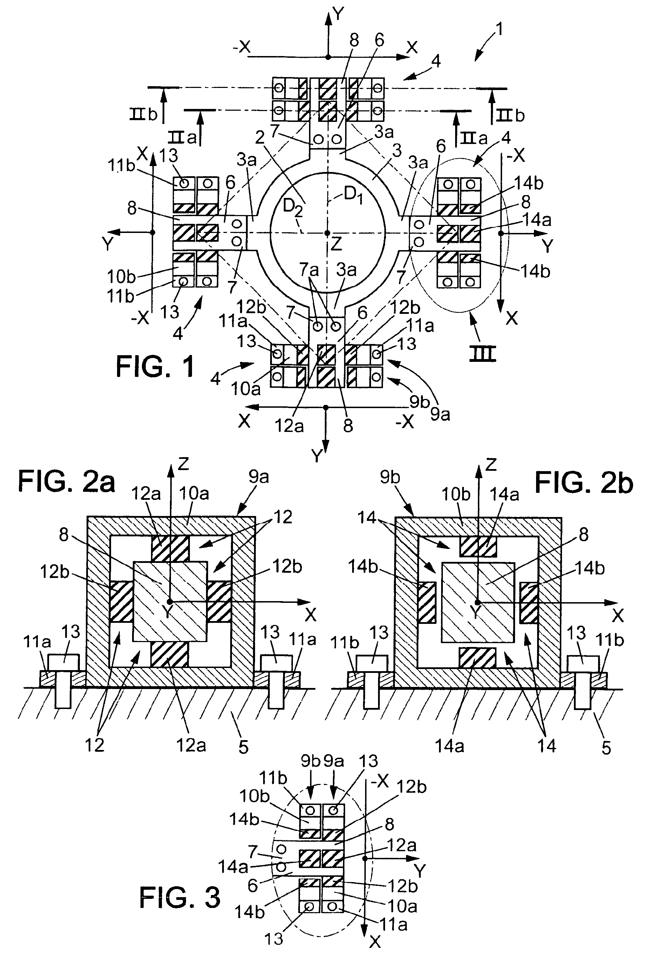

Afin de bien préciser les termes utilisés dans le présent mémoire descriptif, nous renvoyons le lecteur aux figures 1 à 3 et 6 à 8 annexées, où sont représentées les directions dites « longitudinale » Z, « radiale » Y et « tangentielle » X, associées à chaque module d'orientation. Ces directions X, Y, Z sont orientées respectivement :
- pour la direction longitudinale Z : selon un axe - ZZ dit longitudinal de l'équipement vibrant, car sensiblement perpendiculaire à son support et/ou à la structure porteuse, ,
- pour la direction radiale Y : selon un axe - YY dit radial, perpendiculairement à la direction longitudinale Z et passant par un centre géométrique ou de symétrie de l'équipement à isoler
- pour la direction tangentielle X : selon un axe - XX dit tangentiel, perpendiculaire aux deux directions Z et Y.

Les butées souples des modules d'isolation comprennent chacune au moins un élément en élastomère venant en contact avec ladite autre pièce rigide en vis-à-vis, en position active de la butée souple, lors de déformations d'amplitude suffisante du ou des plots d'isolation de sorte que l'élément en élastomère de la butée souple travaille en compression lorsque la butée est active.

Cependant, ce type de réalisation d'isolateurs à élastomère suivant WO 2007/077350 possède quelques limitations.

D'une part, lorsque les butées ne sont pas actives, c'est-à-dire pendant le mode de fonctionnement nominal du dispositif d'isolation, la raideur en torsion (c'est-à-dire autour de l'axe longitudinal Z) de l'ensemble du dispositif d'isolation ne repose que sur la raideur en cisaillement des plots d'isolation qui sont disposés suivant la direction longitudinale Z, et/ou suivant la direction radiale Y. Or, cette raideur des plots en cisaillement est en général beaucoup plus faible que la raideur des plots en traction/compression, et, dans certains cas, elle est insuffisante pour supporter des efforts utiles qui doivent être transmis par l'équipement en torsion suivant la direction longitudinale Z.

Une autre limitation vient du fait que, dans les configurations suivant l'état de l'art, les modes de torsion ne sont pas bien découplés en fréquence par rapport aux modes de basculement (suivant les directions radiale Y et tangentielle X).

Le problème à la base de l'invention est de proposer un dispositif d'isolation multi-axes d'au moins un équipement générateur de vibrations, embarqué sur une structure porteuse, tel qu'un satellite, analogue à ceux présentés ci-dessus et qui remédie aux inconvénients précités de l'état de la technique et convienne mieux aux diverses exigences de la pratique que les dispositifs connus, en particulier selon WO 2007/077350 précité.

Le but de la présente invention est donc d'apporter des solutions simples aux limitations connues de l'état de la technique.

Afin de remédier à ces limitations, la présente invention propose un dispositif comprenant au moins trois modules d'isolation répartis à la périphérie dudit équipement vibrant ou d'un support de ce dernier, chaque module d'isolation comportant au moins deux pièces rigides dont l'une au moins, dite pièce externe, est destinée à être fixée à la structure porteuse, et dont au moins une autre, dite pièce interne, est destinée à être fixée audit équipement vibrant ou à son support, au moins une pièce interne et au moins une pièce externe étant reliées l'une à l'autre par au moins un plot d'isolation en élastomère atténuant par sa déformation la transmission de vibrations de faible amplitude générées par ledit équipement, chaque module comprenant également au moins deux butées souples montées sur au moins une pièce interne ou au moins une pièce externe, et ayant chacune une extrémité libre en vis-à-vis d'une autre pièce respectivement externe ou interne et sans contact avec ladite autre pièce au repos, chacune desdites au moins deux butées souples agissant suivant au moins un axe de déformation dudit au moins un plot d'isolation, et deux des butées souples, dites longitudinales, étant actives suivant l'axe longitudinal, en sens opposés, et qui se caractérise en ce que chaque module d'isolation comprend de plus deux butées souples, dites tangentielles, actives suivant l'axe tangentiel, en sens opposés. Ainsi, chaque module ne comporte pas nécessairement de butées souples suivant l'axe radial, comme nécessaire dans WO 2007/007350.

Comme dans WO 2007/077350, les butées souples des modules d'isolation comprennent chacune avantageusement au moins un élément en élastomère venant en contact avec ladite autre pièce rigide en vis-à-vis, en position active de la butée souple correspondante.

Ainsi, dans une réalisation particulière de butée souple, l'élément en élastomère d'au moins une butée souple d'au moins un module d'isolation présente une extrémité libre en vis-à-vis de ladite autre pièce externe ou interne, et sans contact au repos avec ladite autre pièce, qui comporte une partie en vis-à-vis dudit élément en élastomère et constituée d'un bossage métallique de ladite autre pièce.

Mais, dans une autre réalisation particulière de butée souple, cette dernière, sur au moins un module, peut comprendre une partie rigide qui est constituée d'un bossage métallique de la pièce du module portant la butée, ce bossage portant l'élément en élastomère de la butée.

Avantageusement, pour une meilleure isolation selon la direction tangentielle et la direction longitudinale, au moins un module d'isolation, mais de préférence chacun d'eux, comprend au moins un plot d'isolation dit tangentiel, monté sensiblement selon l'axe tangentiel et/ou au moins un plot d'isolation dit longitudinal, monté sensiblement selon l'axe longitudinal.

Mais de plus, pour une meilleure isolation dans les deux sens opposés selon la direction longitudinale et la direction tangentielle, au moins un module d'isolation, mais de préférence chacun d'eux, comprend deux plots d'isolation longitudinaux, de préférence identiques montés sensiblement symétriquement de part et d'autre d'une pièce interne dudit module selon l'axe longitudinal, et/ou deux plots d'isolation tangentiels, de préférence identiques montés sensiblement symétriquement de part et d'autre d'une pièce interne dudit module selon l'axe tangentiel.

Pour un comportement équilibré du dispositif, dans les deux sens opposés selon la direction longitudinale et selon la direction tangentielle, aux grands déplacements, il est de plus avantageux, sur au moins un module, et de préférence sur chacun d'eux, que les deux butées souples longitudinales, de préférence identiques, soient montées sensiblement symétriquement de part et d'autre d'une pièce interne selon l'axe longitudinal, et que les deux butées souples tangentielles, de préférence identiques, soient montées sensiblement symétriquement de part et d'autre d'une pièce interne selon l'axe tangentiel.

En outre, afin de simplifier la structure des dispositifs selon l'invention et d'en réduire le coût de réalisation, l'ensemble des butées souples d'au moins un module, et de préférence de chacun d'eux, est avantageusement constitué d'un seul élément en élastomère, fixé sur l'une des pièces rigides interne(s) et externe(s), en vis-à-vis d'une autre pièce rigide, respectivement externe ou interne.

Mais, plus avantageusement encore, l'ensemble des plots et des butées souples d'au moins un module, et de préférence de chacun d'eux, est constitué d'un seul élément en élastomère.

Dans un premier mode de réalisation facilitant l'interchangeabilité des butées souples, afin d'améliorer l'adaptation du dispositif à son application, au moins un module, et de préférence chacun d'eux, comprend deux pièces rigides externes, dont l'une porte toutes les butées souples, et l'autre est reliée par ledit au moins un plot d'isolation à la ou une pièce rigide interne dudit module, la partie souple desdites butées souples étant fixée soit sur la face interne de ladite pièce rigide externe portant toutes les butées souples, soit sur la face externe de la ou une pièce rigide interne.

Avantageusement dans ce cas, la pièce externe portant les butées souples est fixée amoviblement à ladite structure porteuse, en position radiale externe par rapport à l'autre pièce externe dudit module.

Ceci permet de démonter uniquement ladite pièce externe portant les butées souples, et la remplacer par une autre pièce externe portant d'autres butées souples, sans avoir à démonter d'autres pièces, en particulier celles supportant le ou les plots d'isolation du dispositif.

Dans un deuxième mode de réalisation, facilitant également l'interchangeabilité des butées souples, sur au moins un module, et de préférence sur chacun d'eux, une première pièce interne est fixée audit équipement vibrant ou à son support, et liée par ledit au moins un plot d'isolation à la ou une pièce externe dudit module, et toutes les butées souples sont portées par une deuxième pièce interne fixée de manière amovible et réglable en position sur ladite première pièce interne. Il suffit ainsi de procéder au remplacement de la deuxième pièce interne et des butées souples qu'elle porte par une autre deuxième pièce avec d'autres butées souples pour améliorer l'adaptation du dispositif à son application, la partie souple desdites butées souples étant fixée soit sur la face interne de la ou une pièce externe, soit sur la face externe de ladite deuxième pièce rigide interne.

Dans ce deuxième mode de réalisation, les butées souples sont avantageusement portées sur ou autour de l'extrémité radiale externe de ladite deuxième pièce interne agencée en embout radial qui s'emmanche partiellement, amoviblement et avec un réglage radial, dans ladite première pièce interne liée par ledit au moins un plot à un cadre d'une ou de l'unique pièce externe dans laquelle s'engage radialement lesdites première et deuxième pièces internes. Ce mode de réalisation présente ainsi une structure simple et économique à réaliser et monter.

Dans un troisième mode de réalisation de structure encore simplifiée et de réalisation plus économique, sur au moins un module, et de préférence sur chacun d'eux, les parties souples des butées souples sont fixées sur une même pièce interne et constituées d'un seul élément en élastomère, de section par exemple quadrangulaire ou circulaire, fixé sur ou autour d'une partie d'extrémité radiale externe, de forme générale respectivement parallélépipédique ou cylindrique, de ladite pièce interne et engagé, sans contact au repos, dans un cadre de forme correspondante d'au moins une pièce externe.

Mais, selon une autre variante de réalisation, sur au moins un module, et de préférence sur chacun d'eux, les parties souples des butées souples sont fixées sur une même pièce externe et sont constituées d'un seul élément en élastomère en forme de manchon de section par exemple quadrangulaire ou cylindrique fixé par sa face externe à l'intérieur d'un cadre de ladite pièce externe, et entourant, sans contact au repos, une butée rigide de forme correspondante montée sur un embout radial d'une pièce interne, en saillie radialement vers l'extérieur et engagé dans le cadre de la pièce externe.

Dans cette autre variante, la butée rigide peut, avantageusement, être interchangeable et avoir une forme sensiblement parallélépipédique ou cylindrique et être fixée, de préférence de manière amovible et réglable, à l'extrémité radiale externe de l'embout radial de la pièce interne, afin de permettre aisément le réglage de l'interstice fonctionnel entre les positions de repos et active des butées souples.

Comme dans WO 2007/077350, il est possible que chacun des modules d'isolation d'un dispositif soit tel que son axe radial soit incliné d'un même angle par rapport au plan de pose de l'équipement vibrant sur un plateau porte-équipement dont sont solidaires les pièces internes desdits modules. Dans ce cas le terme « longitudinal » désigne non plus la perpendiculaire au plan de pose de l'équipement mais une direction inclinée sur ce plan de pose et ayant une composante principale perpendiculaire au plan de pose, la définition des directions radiale et tangentielle restant inchangée.

Il est de plus avantageux, pour simplifier la conception du dispositif, tout en facilitant l'équilibrage des efforts et couples, que les différents modules d'isolation du dispositif de l'invention soient sensiblement identiques les uns aux autres, et/ou que le dispositif comprenne ou soit constitué de trois modules identiques, disposés aux sommets d'un triangle de préférence équilatéral.

Mais, pour faciliter la conception de l'ensemble par effet de symétrie, le dispositif peut aussi comprendre ou être constitué de quatre modules identiques, disposés de préférence aux sommets d'un carré et orientés de préférence de façon symétrique par rapport aux diagonales du carré.

Avantageusement en outre, les caractéristiques des plots d'isolation, en termes de section, hauteur, module viscoélastique, angles entre les plots longitudinaux et le plan médian de la ou des pièce(s) interne(s), angles entre l'axe radial des modules d'isolation et le plan de pose de l'équipement, sont choisis afin d'assurer que les fonctions fréquentielles de transmissibilité des efforts en force et couple selon les trois axes aux petits mouvements, en deçà de la position active des butées souples, correspondent à un gabarit spécifié, de sorte que, par exemple, les vibrations de faibles amplitudes en force et couple transmises par l'équipement à la structure porteuse soient correctement filtrées au-delà d'une certaine fréquence, et que les forces et couples utiles générés par l'équipement soient transmis sans altération préjudiciable, en deçà de ladite fréquence.

De manière analogue, les caractéristiques des butées souples, en termes de section, hauteur d'élastomère, module viscoélastique de l'élastomère, dimension de l'interstice entre la butée souple et la pièce en vis-à-vis, sont telles qu'une déformation trop importante des plots d'isolation lors de fortes charges appliquées au dispositif est évitée, empêchant ainsi toute détérioration ou phénomène irréversible indésirable, et simultanément, les fonctions fréquentielles de transmissibilité des efforts en force et couple selon les trois axes dans toute la plage de fonctionnement prévue pour le dispositif correspondent à un gabarit spécifié, de sorte que les vibrations et chocs de grandes amplitudes en force et couple transmis par la structure porteuse à l'équipement soient correctement filtrés.

L'invention concerne également une application du dispositif d'isolation tel que présenté ci-dessus et qui se caractérise en ce que l'équipement est un équipement spatial embarqué à bord d'un satellite, ledit équipement comprenant au moins une partie tournante générant des vibrations, comme par exemple l'un au moins des équipements suivants : roue de réaction, roue cinétique, roue d'inertie, roue à stockage d'énergie, gyrodyne ou actionneur gyroscopique ou CMG, ledit équipement muni de son dispositif d'isolation devant résister aux charges statiques et dynamiques tels que vibrations, chocs, qu'il subit au lancement du satellite.

L'application du dispositif d'isolation peut également être telle que ledit équipement spatial embarqué à bord d'un satellite comprend au moins une partie animée en translation d'un mouvement comprenant au moins une composante temporelle périodique dans le temps générant des vibrations, comme par exemple un compresseur utilisé pour générer du froid, ledit équipement muni de son dispositif d'isolation devant résister aux charges statiques et dynamiques tels que vibrations, chocs qu'il subit au lancement du satellite.

D'autres caractéristiques et avantages de l'invention ressortiront de la description donnée ci-dessous, à titre non limitatif, d'exemples de réalisation décrits en référence aux dessins annexés sur lesquels :
- La figure 1 est une vue schématique d'un exemple de dispositif d'isolation multi-axes selon l'invention, représenté dans son ensemble, en partie en plan et en partie en coupe transversale (perpendiculairement à l'axe longitudinal Z d'un équipement vibrant) au niveau des plots et butées souples supérieurs de chacun des quatre modules d'isolation identiques de ce dispositif ;
- Les figures 2a et 2b sont des vues schématiques en coupe respectivement selon IIa-IIa et IIb-IIb de la figure 1, représentant les deux pièces externes d'un module qui sont équipées respectivement des plots d'isolation en élastomère et des butées souples en élastomère de ce module ;
- La figure 3 est une variante de réalisation du module représenté dans le détail III sur la figure 1 ;
- La figure 4 est une vue schématique en coupe longitudinale passant par les centres de deux modules d'isolation opposés de deux variantes du dispositif d'isolation selon la figure 1, chaque variante étant représentée sur l'une respectivement des demi-coupes de la figure 1 ;
- La figure 5 est une vue schématique partielle en coupe longitudinale et radiale d'une variante du module d'isolation, dont l'axe radial est incliné sur le plan de pose ou de suspension de l'équipement vibrant ;
- La figure 6 est une vue schématique partielle, en coupe longitudinale et radiale, d'une autre variante de module d'isolation, dont toutes les butées souples sont d'un seul élément en élastomère monté sur la pièce rigide interne du module, à l'intérieur et en vis-à-vis d'un cadre de la pièce externe rigide de ce module ;
- La figure 7 est une vue schématique partielle, en coupe tangentielle selon VII-VII de la figure 6 ;
- La figure 8 est une vue schématique partielle d'une autre variante de module, en coupe tangentielle au niveau des butées souples en un seul élément en manchon d'élastomère entourant une partie de la pièce rigide interne de ce module, à l'intérieur et en vis-à-vis d'un cadre de la pièce externe de ce module ;
- La figure 9 est une vue analogue à la figure 8 d'encore une autre variante de module, dont les butées souples sont en un seul élément en manchon d'élastomère monté à l'intérieur du cadre de la pièce rigide externe du module, en regard d'une partie de la pièce rigide interne du module qui est engagée dans ce cadre ;
- La figure 10 est une vue en perspective d'un autre exemple de module d'isolation, dont la pièce rigide externe est monobloc ;
- La figure 11 est une vue en perspective éclatée du module de la figure 10 ;
- Les figures 12 et 13 sont deux vues en coupe, respectivement longitudinale et transversale, du module des figures 10 et 11 ;
- La figure 14 est une autre vue en perspective du module des figures 10 à 13, et
- La figure 15 est une vue du module des figures 10 à 14 en coupe selon XV-XV de la figure 14.

Le dispositif d'isolation multi-axes 1, représenté dans son ensemble sur la figure 1, est destiné à filtrer des vibrations entre, d'une part, un équipement vibrant 2 ou ensemble d'équipements dont au moins un est vibrant, représenté schématiquement sur la figure 1 comme étant de forme globale externe cylindrique de section circulaire, d'axe longitudinal défini par la direction Z, monté sur un plateau porte-équipement 3 suspendu par quatre modules d'isolation 4 identiques les uns aux autres sur une structure porteuse 5, et, d'autre, part cette structure porteuse 5, telle que la plate-forme ou la structure interne d'un module de service d'un satellite, sur laquelle le dispositif 1 est fixé par les modules 4 simples à concevoir, à réaliser et monter à la périphérie de l'équipement 2 et du plateau 3 qui le porte. Ces modules 4 sont agencés, par rapport au plateau 3 et à l'équipement 2, en deux paires de modules 4 diamétralement opposés par rapport à l'axe longitudinal Z, et régulièrement répartis en direction circonférentielle autour du plateau 3 de sorte que les quatre modules 4 sont situés et centrés aux sommets d'un carré (représenté en traits interrompus) et disposés symétriquement par rapport aux deux diagonales (D1 et D2) de ce carré, qui sont perpendiculaires l'une à l'une et correspondent chacune à la direction radiale Y des deux modules 4 opposés de l'une respectivement des deux paires de modules 4.

En variante, le dispositif d'isolation multi-axes pourrait ne comporter que trois modules d'isolation 4 identiques, régulièrement répartis à la périphérie du plateau 3, et disposés de préférence aux sommets d'un triangle équilatéral enveloppant le plateau 3 et centré sur l'axe Z. Mais une réalisation à quatre modules 4 selon la figure 1 procure l'avantage d'une meilleure symétrie. En outre, la conception du dispositif d'isolation 1 est simplifiée, car les différents degrés de liberté en forces et en couples sont alors découplés et les dimensionnements sont plus simples à réaliser, compte tenu du caractère modulaire du dispositif d'isolation 1 et de la structure, particulière à l'invention, de chaque module d'isolation 4, ce qui représente un avantage important de l'invention par rapport à l'état de la technique.

Chacun des modules 4, indépendant des autres dans sa fixation sur la structure porteuse 5 (schématiquement représentée sur les figures 2a, 2b, 4 et 5), comprend une pièce rigide interne 6, s'étendant radialement, et dont une partie d'extrémité radiale interne 7 (selon l'axe radial-YY propre à chaque module 4, passant par son centre et perpendiculaire à la direction longitudinale Z) est agencée en embase de fixation rigide, mais de préférence amovible, par exemple par des boulonnages 7a, sur une bride de fixation 3a en saillie radiale vers l'extérieur du plateau 3 en forme de disque circulaire. La pièce rigide interne 6 présente également une partie d'extrémité radiale externe 8, reliée à une première pièce rigide externe 9a du module 4 par quatre plots 12 d'isolation en élastomère.

Cette pièce externe 9a comprend un cadre quadrangulaire 10a, solidaire de deux embases 11a latérales rectangulaires, chacune fixée à la structure porteuse 5 par une vis 13, de sorte que la pièce externe 9a s'étend sur la structure 5 parallèlement à la direction tangentielle X, l'épaisseur du cadre 10a (selon la direction radiale Y) étant en général inférieure à sa largeur (selon la direction tangentielle X) et à sa hauteur (selon la direction longitudinale Z). Le cadre 10a présente une ouverture centrale également quadrangulaire (rectangulaire ou carrée) délimitée par deux faces planes opposées, perpendiculaires à la direction longitudinale Z (faces horizontales sur la figure 2a) et deux autres faces planes opposées perpendiculaires à la direction tangentielle X (faces verticales sur la figure 2a) et la section de cette ouverture centrale dans le plan des directions X-Z est sensiblement supérieure à la section transversale quadrangulaire de la partie d'extrémité radiale externe 8, de forme parallélépipédique, qui traverse radialement le cadre 10a.

Les quatre plots 12 sont, dans cet exemple, identiques les uns aux autres, et chacun en forme de bloc parallélépipédique d'élastomère, fixé par l'une de deux de ses faces opposées contre une face latérale plane de la partie 8 et par l'autre de ces deux faces opposées contre la face interne plane en vis-à-vis sur le cadre 10a, cette fixation étant assurée par vulcanisation par moulage de l'élastomère in situ, par collage, ou par tout autre moyen équivalent.

Ces quatre plots 12 sont ainsi agencés en une paire de plots opposés dits longitudinaux 12a, car sollicités en traction compression par tout effort ou composante d'effort en force et/ou en couple qui est parallèle à la direction longitudinale Z, et en une paire de plots opposés dits tangentiels 12b, car sollicités en traction-compression par tout- effort ou composante d'effort en force et/ou en couple qui est parallèle à la direction tangentielle X.

Les deux plots longitudinaux 12a sont actifs en sens opposés suivant la direction longitudinale Z, puisque l'un d'eux est actif en compression lorsque l'autre est actif en traction, et inversement (les plots tangentiels 12b étant alors sollicités en cisaillement simultanément dans le même sens selon Z), et ces deux plots 12a sont montés selon l'axe longitudinal -ZZ, sensiblement symétriquement de part et d'autre de la partie radiale externe 8 de la pièce interne 6.

De même, les deux plots tangentiels 12b sont actifs en sens opposés suivant la direction tangentielle X, puisque l'un d'eux est actif en compression lorsque l'autre est actif en traction, et inversement (les plots longitudinaux 12a étant alors sollicités en cisaillement simultanément dans le même sens selon X), et ces deux plots 12b sont montés selon l'axe tangentiel -XX, également sensiblement symétriquement de part et d'autre de la partie radiale externe 8 de la pièce interne 6.

Chaque module 4 comprend également une seconde pièce rigide externe 9b, de structure identique à celle de la première pièce externe 9a, c'est-à-dire comprenant un cadre 10b et deux embases 11h, qui sont identiques respectivement au cadre 10a et aux deux embases 11a, et également fixées chacune par une vis 13 à la structure porteuse 5, dans une position parallèle et adjacente à la première pièce interne 9a, mais radialement à l'extérieur de la pièce 9a. Cette seconde pièce externe 9b porte quatre butées souples 14 qui, dans cette exemple, sont identiques les unes aux autres et constituées chacune d'un bloc d'élastomère de forme parallélépipédique, fixé par une face plane, ou base, contre l'une respectivement des quatre faces planes internes du cadre 9b, comme représenté sur la figure 2b. L'épaisseur des butées souples 14 est telle que chaque butée 14 a une face plane, opposée à sa base, qui constitue une extrémité libre située en vis-à-vis d'une face latérale plane respective de la partie d'extrémité radiale 8 de la pièce interne 6, qui est également engagée dans l'ouverture centrale du cadre 9b, mais sans contact, au repos de cette extrémité libre de chaque butée souple 14 avec la face en vis-à-vis sur la partie 8 de la pièce interne 6.

Ces quatre butées sont ainsi agencées en une paire de butées souples opposées dites longitudinales 14a, car agissant suivant l'axe de déformation des plots longitudinaux 12a en traction-compression, c'est-à-dire suivant la direction longitudinale Z, et en une paire de butées souples opposées dites tangentielles 14b, car agissant suivant l'axe de déformation des plots tangentiels 12b en traction-compression, c'est-à-dire suivant la direction tangentielle X.

Ainsi, les butées longitudinales 14a sont actives suivant l'axe longitudinal -ZZ pour l'une (la butée 14a en position supérieure sur la figure 2b) et en sens opposé pour l'autre (la butée 14a en position inférieure sur la figure 2b) en limitant l'amplitude des déplacements longitudinaux de la partie 8 de la pièce interne 6 avec le plateau 3 et l'équipement vibrant 2 par rapport à la structure porteuse 5 et la seconde pièce externe 9b qui en est solidaire, par la venue en contact de cette partie R avec la butée souple longitudinale 14a supérieure ou inférieure. De manière analogue, les butées tangentielles 14b sont actives suivant l'axe tangentiel -XX pour l'une (la butée 14b de droite sur la figure 2b) et en sens opposé pour l'autre (la butée 14b de gauche sur la figure 2b) en limitant l'amplitude des déplacements tangentiels de la partie 8 de la pièce interne 6 avec le plateau 3 et l'équipement vibrant 2 par rapport à la structure porteuse 5 et la seconde pièce externe 9b qui en est solidaire, par la venue en contact de cette partie 8 avec la butée souple tangentielle 14b de droite ou de gauche.

En variante, la partie en élastomère 14 de chaque butée souple 14a ou 14b peut avoir une raideur plus importante que celle de l'élastomère 12 des plots 12a ou 12b, et/ou chaque butée souple 14a ou 14b peut avoir éventuellement une armature rigide, rapportée ou intégrée à la pièce rigide 9b qui la porte, et supportant au moins une couche d'élastomère recouvrant cette armature rigide.

En alternative également, non représentée sur les figures 1, 2 et 3 mais sur d'autres figures (4, 5, etc), un éventuel bossage de la partie d'extrémité radiale 8 de la pièce interne 6 qui fait face aux butées souples 14 peut être introduit pour diminuer le jeu des butées souples, de sorte que les déformations des plots d'isolation ne soient pas trop importantes lors des grands déplacements relatifs entre les pièces interne et externe des modules d'isolation.

En fonctionnement normal de l'équipement 2 sur la satellite en orbite, les plots d'isolation 12a et 12b atténuent, par leurs déformations, la transmission à la structure 5 des vibrations de faible amplitude générées par l'équipement vibrant 2, sans que les butées souples 14a et 14b ne viennent en contact avec la partie 8 de la pièce rigide interne 6 en vis-à-vis, tandis que les vibrations de forte amplitude générées par des chocs et vibrations subis par exemple par la structure porteuse 5, au lancement du satellite, sont limitées par la venue en position active de l'une ou l'autre des butées souples longitudinales 14a et tangentielles 14b, dont le bloc d'élastomère vient en contact avec la face en vis-à-vis de la partie 8 de la pièce interne 6. En position active de l'une et/ou l'autre des butées souples 14a et 14b, la compression de leur élément en élastomère permet d'atténuer la transmission des chocs et vibrations de grande amplitude depuis la structure porteuse vers l'équipement 2 sur le plateau 3, lors du lancement du satellite notamment. Le contact d'une butée souple 14a ou 14b par son élément en élastomère avec la face en vis-à-vis sur la partie 8 de la pièce interne 6, en position active, n'est établi que pour une déformation en compression suffisante d'un plot d'isolation 12a ou 12b, cette déformation étant plus grande que les déformations maximales en compression rencontrées lors du fonctionnement normal de l'équipement 2 sur le satellite en orbite.

Le dispositif 1 ainsi réalisé assure une isolation multi-axes du fait qu'il comprend au moins trois, et de préférence quatre, modules 4 ainsi constitués. En effet, les déplacements longitudinaux ou composantes longitudinales (selon Z) des déplacement de l'équipement vibrant 2 avec le plateau 3 et les pièces internes 6 des modules 4 par rapport à la structure porteuse 5 sont atténués, et éventuellement limités respectivement par les déformations en traction-compression des plots longitudinaux 12a et en cisaillement des plots tangentiels 12b de tous les modules 4, et, le cas échéant, par la venue en position active d'une butée souple 14a de tous les modules 4.

Les déplacements en torsion de l'équipement vibrant 2 et du plateau 3 avec les pièces internes 6 des modules 4 autour de la direction longitudinale Z sont atténués par déformation essentiellement en traction-compression des plots tangentiels 12b et la déformation en cisaillement des plots longitudinaux 12a de tous les modules 4, avec, éventuellement, la limitation de ces mouvements de torsion par la venue en position active de l'une des butées souples tangentielles 14b de tous les modules 4.

Tout déplacement de l'équipement 2 et du plateau 3 dans n'importe quelle direction radiale par rapport à la direction longitudinale Z se décompose en deux composantes dont chacune s'étend selon l'une respectivement des deux diagonales D1 et D2. Ainsi, un effort de déplacement radial selon D1 sollicite en cisaillement les 4 plots 12 de chacun des deux modules 4 centrés sur D1, mais est essentiellement atténué par la sollicitation en traction-compression des deux plots tangentiels 12b de chacun des deux modules 4 centrés sur la diagonale D2, et dont l'une des butées souples tangentielles 14b de chacun peut être amenée en position active pour limiter l'amplitude des déplacements radiaux selon D1.

De même, la composante selon D2 d'un déplacement radial de l'équipement 2 et du plateau 3 sollicite en cisaillement les plots 12 des deux modules 4 centrés sur D2, mais est essentiellement atténuée par la sollicitation en traction-compression des plots tangentiels 12b des deux modules 4 centrés sur D1, et dont l'une des butées souples tangentielles 14b de chacun peut, en venant en position active, limiter l'amplitude de déplacements radiaux selon D2, provoqués par de fortes vibrations ou des chocs.

Les efforts et déplacements en basculement de l'équipement 2 et du plateau 3 autour de n'importe quelle direction dans le plan de pose de l'équipement 2 sur le plateau 3 peuvent se décomposer en efforts et basculements autour de chacune des diagonales D1 et D2, les basculements autour de D1 étant essentiellement atténués par la sollicitation en traction-compression des plots longitudinaux 1.2a des deux modules 4 centrés sur D2, et inversement, les basculements autour de D2 sont essentiellement atténués par les sollicitations en traction-compression des plots longitudinaux 12a des deux modules 4 centrés sur D1, les autres plots étant essentiellement sollicités en cisaillement. Ces mouvements de basculement sont limités en amplitude par la venue en position active de l'une des butées souples longitudinales 14a des deux modules 4 centrés sur D2 lors de basculements autour de D1, et inversement, les basculements autour de D2 peuvent être limités par la venue en position active de l'une des butées souples longitudinales 14a de chacun des deux modules 4 centrés sur D1.

On comprend que le dispositif 1 ainsi réalisé constitue bien un dispositif d'isolation multi-axes, qui permet la tenue au lancement et l'isolation suivant tous les degrés de liberté.

Comme mentionné dans WO 2007/077350, l'intérêt de ce type de dispositif est de réaliser grâce à l'effet combiné de l'ensemble des modules d'isolation les trois fonctions principales suivantes : isolation de vibrations de très faibles amplitudes entre le plateau 3 et la structure porteuse 5 par l'intermédiaire d'un nombre de plots d'isolation restreint, transmission de certains couples utiles produits par l'équipement ou ensemble d'équipement 2 par l'intermédiaire de ces mêmes plots, et atténuation des chocs et vibrations de fortes amplitudes lors de la phase de lancement.

L'intérêt de ce dispositif par rapport à l'état de l'art, dont WO 2007/077350, est que la transmission des couples utiles éventuellement produits par l'équipement 2 suivant les axes X, Y ou Z est facilitée du fait des raideurs plus importantes des plots jouant dans tous les cas en traction/compression plutôt qu'en cisaillement. Cette figure 1 permet de visualiser aisément cet effet lorsque des couples sont produits autour de l'axe Z.

D'autre part, la disposition particulière des butées souples suivant l'invention telle que représentée sur la figure 1 offre des protections suivant tous les axes en translation et rotation grâce à l'effet conjugué des butées de l'ensemble des quatre modules d'isolation, alors qu'un seul module d'isolation pris isolément ne pourrait en aucune façon résister à de forts déplacements relatifs entre le plateau 3 et la structure porteuse 2. C'est cet effet conjugué des au moins trois, et de préférence quatre modules qui permet de simplifier considérablement l'architecture de chaque module par rapport à l'état de l'art. La figure 1 illustre particulièrement bien cet effet conjugué en ce qui concerne les déplacements relatifs en translation dans le plan de pose de l'équipement, ainsi que les déplacements relatifs en rotation autour de l'axe longitudinal.

On comprend également que, si l'interstice fonctionnel disponible, en position de repos, entre chacune des butées souples longitudinales 14a et tangentielles 14b et la face en vis-à-vis de la partie 8 de la pièce interne 6 n'est pas adapté à l'application du dispositif, il est aisé de dévisser les vis 13 de fixation des embases 11b de la seconde pièce rigide externe 9b d'un ou plusieurs des modules 4 du dispositif, pour retirer cette seconde pièce externe 9b et 1a remplacer par une autre, de même structure, mais équipée de butées souples longitudinales 14a et/ou tangentielles 14b ayant d'autres dimensions ou raideur, pour définir, au repos, un interstice fonctionnel adapté à l'application envisagée.

La figure 3 représente une variante de réalisation du module 4 représenté dans le détail III de la figure 1. Dans cette variante, le module 4 comprend toujours une pièce rigide interne 6, réalisée comme décrit ci-dessus, et deux pièces rigides externes 9a et 9b, également réalisées comme décrit ci-dessus et représentées sur les figures 2a et 2b, mais avec cette différence, par rapport à chaque module 4 de la figure 1, que la seconde pièce externe 9b, qui porte les quatre blocs 52 d'élastomère 14 constituant deux butées souples longitudinales 14a et deux butées souples tangentielles 14b, est située radialement à l'intérieur de la première pièce rigide externe 9a, qui est reliée à la partie 8 de la pièce interne 6 par les quatre plots 12 constituant deux plots longitudinaux 12a et deux plots tangentiels 12b. Dans cette variante, le remplacement de la seconde pièce rigide externe 9b, pour remplacer les butées souples 14 par d'autres plus appropriées, ne peut se faire que par un démontage complet du module 4, dont la pièce rigide interne 6 doit être désolidarisée par déboulonnage de la bride 3a correspondante du plateau 3, et dont les deux pièces rigides externes 9a et 9b doivent être démontées de la structure porteuse 5 par le dévissage des vis 13.

Dans ces réalisations, il est avantageux que les deux plots longitudinaux 12a et/ou tangentiels 12b de chaque module 4 soient exactement identiques l'un à l'autre en géométrie et raideur, et éventuellement appareillés après tests, afin d'équilibrer le dispositif 1.

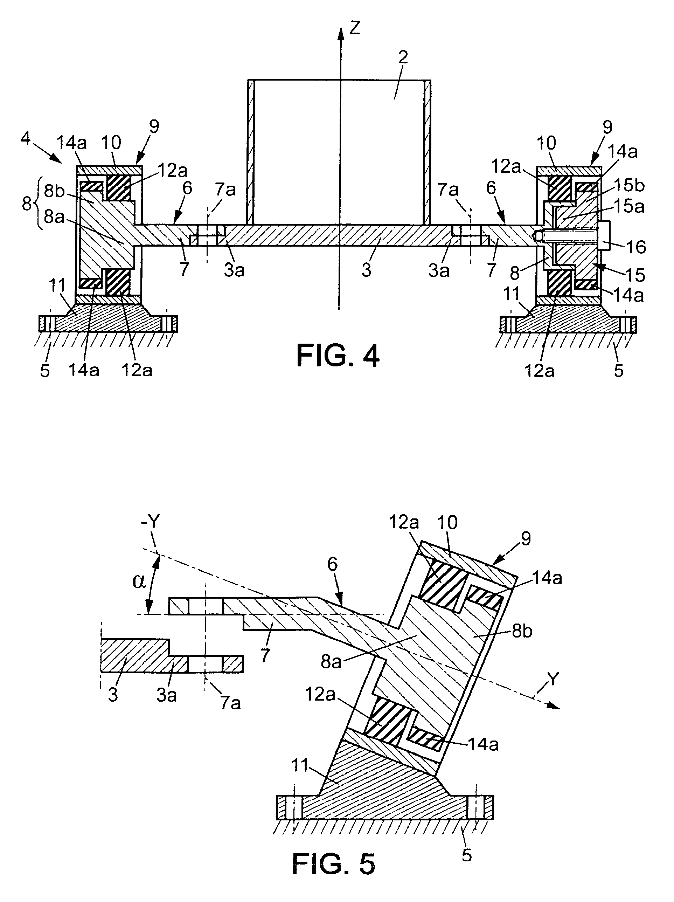

La figure 4 représente deux variantes (une sur chaque demi-coupe) sur lesquelles les quatre butées souples 14 sont portées par une pièce rigide interne.

Sur la variante de la demi-coupe de gauche de la figure 4, on retrouve, dans chaque module 4, une unique pièce rigide interne 6 s'étendant radialement, et dont la partie d'extrémité radiale interne 7 se solidarise amoviblement à une bride de fixation 3a du plateau 3 portant l'équipement 2 par des boulonnages 7a représentés schématiquement par leur axe de fixation. Dans cette variante, la partie radiale externe 8 de la pièce interne 6 présente deux portions parallélépipédiques dont l'une 8a, adjacente à la partie radiale interne 7 et de plus petite section transversale, est reliée par un épaulement à la portion parallélépipédique 8b de plus grande section transversale et formant l'extrémité radiale externe de la pièce interne 6, dont les deux portions parallélépipédiques 8a et 8b sont engagées radialement à l'intérieur du cadre quadrangulaire 10 d'une unique pièce rigide externe 9, comportant également une embase 11 de fixation à la structure porteuse 5 par des vis (non représentées). Dans cette variante, la pièce rigide interne 6 est bien réalisée d'une seule pièce, métallique par exemple, qui intègre sa partie radiale interne 7 et sa partie radiale externe 8 constituée des deux portions parallélépipédiques 8a et 8b. La pièce interne 6 est reliée au cadre 10 de la pièce externe 9 par quatre plots d'isolation en élastomère 12 constituant deux plots longitudinaux 12a et deux plots tangentiels (non visibles sur cette demi-coupe), qui sont fixés chacun par l'une de deux faces opposées sur l'une des quatre faces latérales de la portion 8a, et par la face opposée contre la face plane interne en vis-à-vis dans le cadre 10, tandis que les quatre butées souples en élastomère 14, formant deux butées longitudinales 14a et deux butées tangentielles (non visibles sur cette demi-coupe), sont fixées chacune par l'une de deux faces opposées, formant une base, sur l'une respectivement des quatre faces latérales de la portion parallélépipédique 8b, la face opposée à la base de chaque butée souple étant en vis-à-vis, sans contact, de l'une respectivement des quatre faces internes du cadre 10 de la pièce externe 9, de sorte que l'interstice fonctionnel est réalisé, dans cette variante, entre chaque butée souple et une face en regard de la pièce rigide externe 9.

On comprend que le module 4 de cette variante fonctionne comme le module 4 des réalisations des figures 1 à 3, lorsqu'il est associé à au moins deux autres modules pour constituer un dispositif d'isolation multi-axes selon l'invention.

Cette figure 4 illustre particulièrement bien l'effet conjugué des modules d'isolation en ce qui concerne les déplacements relatifs en translation suivant l'axe longitudinal Z de l'équipement, ainsi que les déplacements relatifs en rotation en basculement de l'équipement 2. On voit clairement que dans tous les cas, les plots d'isolation vont jouer principalement en traction/compression ce qui est un élément favorable pour l'application considérée.

La variante de la demi-coupe de droite de la figure 4 se distingue de la variante de la demi-coupe de gauche uniquement par le fait que les quatre butées souples 14 sont montées sur une seconde pièce rigide interne 15, qui se monte de manière amovible et radialement réglable en bout de la partie d'extrémité radiale externe 8 de la première pièce rigide interne 6, dont la partie d'extrémité radiale interne 7 se fixe amoviblement, comme dans l'autre variante, sur la bride de liaison 3a du plateau 3, par des boulonnages 7a. Dans cette variante, l'unique pièce rigide externe 9 est réalisée comme dans la variante précédemment décrite, c'est-à-dire qu'elle comporte un unique cadre 10 disposé tangentiellement et fixé à la structure porteuse par l'intermédiaire d'une embase 11 visée sur cette structure, la partie d'extrémité radiale externe 8 de la première pièce interne 6 ainsi que la seconde pièce rigide interne 15 étant radialement engagées dans le cadre 10.

Dans cette variante, la partie radiale externe 8 de la première pièce interne 6 est tubulaire et s'ouvre radialement vers l'extérieur pour recevoir une partie radiale interne 15a de la seconde pièce interne 15, qui s'engage dans la partie tubulaire 8, tandis qu'une partie radiale externe 15b, de plus grande section transversale, de la seconde pièce interne 15, et de forme parallélépipédique, supporte les quatre butée souples 14 symétriquement deux à deux sur ses deux paires de faces opposées, et en vis-à-vis et sans contact des quatre faces planes internes du cadre 10, dont ces mêmes faces planes internes sont reliées par les quatre plots d'isolation en élastomère 12 aux quatre faces planes externes de la partie radiale externe 8 parallélépipédique de la première pièce interne 6. La fixation de la seconde pièce interne 15 sur la première 6 est assurée par une vis radiale 16 qui traverse radialement la seconde pièce rigide interne 15 et se visse par l'extrémité de sa tige dans un alésage taraudé dans le fond de la partie radiale externe tubulaire 8 de la première pièce interne 6.

Ainsi, pour changer les butées souples 14, et ajuster leur(s) raideur(s) et/ou le ou les interstices fonctionnels avec le cadre 10, il suffit de dévisser la vis 16 et de changer la seconde pièce rigide interne 15 pour une autre équipée de butées souples 14 mieux adaptées à l'application du dispositif.

La variante de réalisation de la figure 5 correspond à celle de la demi-coupe de gauche de la figure 4, mais avec une unique pièce rigide interne 6 qui est coudée dans sa partie d'extrémité radiale interne 7, par rapport à sa partie radiale externe 8 ayant deux portions parallélépipédiques 8a et 8b dont la première est reliée par les plots 12 au cadre 10 de l'unique pièce rigide externe 9 et la seconde porte les butées souples 14. Ainsi, l'axe radial -YY de chaque module d'isolation 4 est incliné d'un même angle α, par rapport au plan de pose de l'équipement vibrant 2 sur le plateau 3, lorsque les pièces internes telles que 6 sont solidarisées par leur partie radiale interne 7 à une bride de fixation 3a correspondante du plateau 3 par boulonnage 7a, comme déjà expliqué ci-dessus en référence aux figures 1 à 4. Pour permettre la fixation amovible, par vissage, de l'unique pièce rigide externe 9 sur la structure porteuse 5, alors que la partie radiale interne 7 de l'unique pièce rigide interne 6 est fixée au plateau 3 parallèlement au plan de pose précité, l'embase de fixation 11 de la pièce rigide externe 9 présente une face inclinée du même angle, sur laquelle est fixé le cadre quadrangulaire 10 de cette pièce externe 9.

Dans chacune des trois variantes des figures 4 et 5, les deux butées souples longitudinales 14a sont sensiblement identiques et montées symétriquement de part et d'autre de la partie d'extrémité radiale externe 8b de l'unique pièce interne 6 ou de la partie radiale externe 15b d'une seconde pièce rigide interne 15, rapportée amoviblement et réglable radialement sur une première pièce rigide interne 6 solidarisée au plateau 3, et, de même, les deux butées souples tangentielles, non visibles sur ces figures mais telles que 14b sur les figures 1 à 3, sont sensiblement identiques et montées sensiblement symétriquement, selon l'axe tangentiel, de part et d'autre de cette même partie d'extrémité radiale externe 8b de l'unique pièce interne 6 ou de cette même partie radiale externe 15b de la seconde pièce rigide interne 15 rapportée sur la première pièce interne 6.

Ce principe d'utilisation de pièce interne coudée est avantageux pour améliorer les caractéristiques d'isolation dans certains cas, et il peut être appliqué sur l'ensemble des variantes du dispositif telles que décrites dans ce mémoire descriptif.

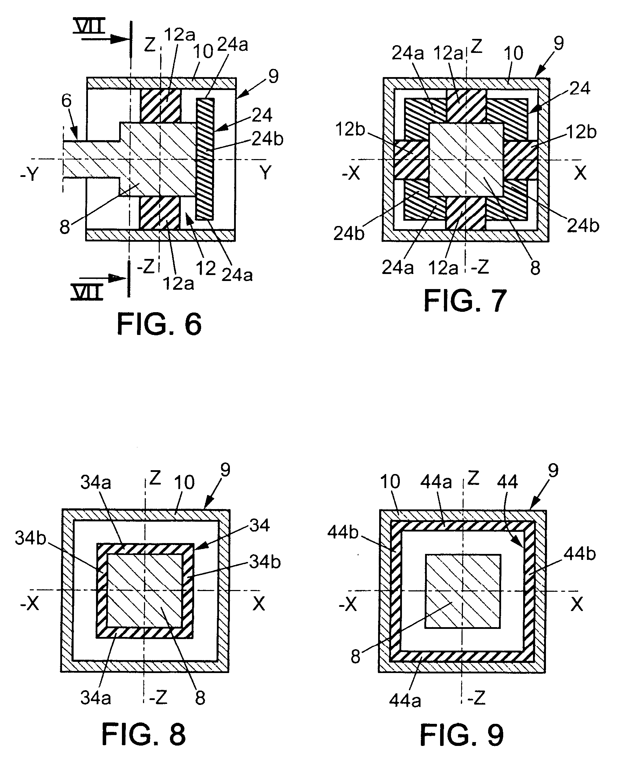

Les figures 6 et 7 représentent partiellement une autre variante du mode de réalisation selon la demi-coupe de gauche de la figure 4, dont la représentation est limitée au cadre quadrangulaire 10 de l'unique pièce rigide externe 9, à la partie d'extrémité radiale externe 8 de l'unique pièce rigide interne 6, et aux plots d'isolation 12 et butées souples en élastomère.

On retrouve que la partie radiale externe 8 de la pièce interne 6 est reliée au cadre 10 de la pièce externe 9 par quatre blocs 12 d'élastomère agencés en deux plots d'isolation longitudinaux 12a, selon l'axe longitudinal -ZZ et symétriques de part et d'autre de cette partie radiale externe 8, et en deux plots d'isolation tangentiels 12b, selon l'axe tangentiel -XX et symétriques de part et d'autre de cette partie radiale externe 8, comme déjà décrit sur la demi-coupe de gauche de la figure 4 et sur la figure 5. Mais la variante des figures 6 et 7 se distingue des variantes précitées par le fait que l'ensemble des butées souples de chaque module 4 est constitué d'un seul élément en élastomère 24, présentant une forme générale externe de parallélépipède rectangle, et qui est fixé contre la face d'extrémité radiale externe de la partie 8 de la pièce interne 6, donc radialement à l'extérieur des plots d'isolation 12a et 12b par vulcanisation par moulage ou par collage notamment, et de sorte que ses deux côtés opposés parallèles à l'axe longitudinal -ZZ constituent les deux butées souples tangentielles 24b, tandis que ses deux côtés perpendiculaires aux axes longitudinal -ZZ et radial -YY constituent les deux butées souples longitudinales 24a.

Comme dans les exemples précédents, chaque butée souple 24a ou 24b est séparée par interstice fonctionnel, au repos ou position nominale, de l'une respectivement des quatre faces internes planes en vis-à-vis sur le cadre 10 de la pièce externe 9.

La figure 8 représente une coupe transversale ou tangentielle d'une variante de réalisation selon les figures 6 et 7, dans laquelle l'unique élément d'élastomère 34 constituant toutes les butées souples du module correspondant est réalisé sous la forme d'un manchon de section quadrangulaire d'élastomère fixé autour de la portion d'extrémité radiale externe de la partie 8 de la pièce interne 6, laquelle partie 8 est de forme externe parallélépipédique rectangle de section transversale par exemple carrée. La pièce rigide interne 6, dont la partie 8 est ainsi équipée du manchon d'élastomère 34 présente deux butées souples longitudinales 34a et deux butées souples tangentielles 34b qui sont plus minces que celles de la réalisation de la figure 7, et procurent donc un interstice fonctionnel nominal plus important avec les faces internes en vis-à-vis du cadre 10 de la pièce externe 9.

La figure 9 représente encore une autre variante, dans laquelle l'unique élément d'élastomère 44, en forme de manchon dé section transversale quadrangulaire et qui constitue toutes les butées souples d'un module 4, est solidarisé par ses quatre faces planes externes contre les quatre faces planes internes de l'ouverture centrale du cadre 10 de l'unique pièce rigide externe 9, de sorte que, dans cette variante, les deux butées souples longitudinales 44a et les deux butées souples tangentielles 44b, formées par les deux paires de côtés opposés du manchon 44, sont portées par la pièce externe 9, dans le cadre 10 de laquelle s'engage la partie d'extrémité radiale externe 8 de l'unique pièce interne 6. Dans cet exemple, comme l'épaisseur du manchon d'élastomère 44 est sensiblement égale à celle du manchon d'élastomère 34 de la figure 8, les interstices fonctionnels entre la partie 8 de la pièce interne 6 et les butées souples de la pièce externe 9 sont sensiblement de même valeur que dans l'exemple de la figure 8, dans l'hypothèse où le cadre 10 de la pièce externe 9 et la partie 8 de la pièce interne 6 présentent les mêmes dimensions.

De plus, si la partie radiale externe 8 de la pièce interne 6 présente une section rectangulaire ou carrée dont les deux côtés sont supérieurs aux deux côtés de la section analogue de la pièce interne 6 dans sa partie adjacente à sa partie radiale interne de fixation sur le plateau 3, la partie radiale externe 8 constitue une butée rigide présentant des bossages ou constituant par elle-même de tels bossages, en vis-à-vis de l'extrémité libre des butées souples en regard 44a ou 44b, sans contact au repos avec ces butées souples, dont les bossages sont séparés par des interstices fonctionnels correspondant aux courses maximum des bossages par rapport aux dites butées souples 44a, 44b, pour passer de la position de repos ou nominale à la position active desdites butées.

Dans cet exemple, comme dans les précédents, la ou les pièce(s) interne(s) telle(s) que 6 et la ou les pièce(s) externe(s) telle(s) que 9 sont de préférence métalliques, en acier ou titane ou alliage de titane par exemple.

En outre, on peut noter que la forme des pièces rigides internes et externes pourrait être approximativement cylindrique plutôt que quadrangulaire ou parallélépipédique. Dans ce cas, les butées souples peuvent être constituées d'une couche d'élastomère de forme correspondante, fixée soit sur la pièce interne (comme sur la figure 8), soit sur la pièce externe (comme sur la figure 9).

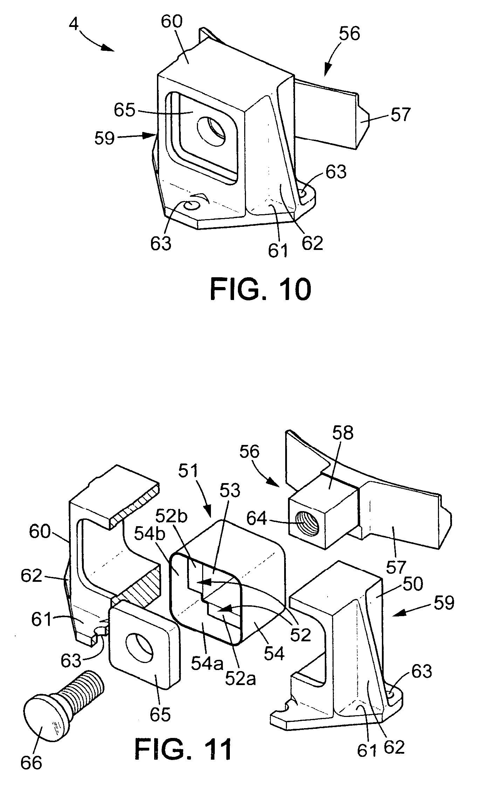

L'exemple de module d'isolation 4 des figures 10 à 15 comprend une unique pièce rigide externe 59, comprenant un cadre quadrangulaire 60, destiné à être positionné et fixé tangentiellement sur une structure porteuse telle que 5, comme dans les exemples précédents, et d'une seule pièce métallique avec une embase 61, à laquelle le cadre 60 est de plus relié par deux nervures 62 latérales de rigidification, l'embase 61 s'étendant sur les deux côtés du cadre 60 et radialement vers l'extérieur de ce dernier, en position opérationnelle, et cette embase 61 est percée de trois logements 63 pour des vis de fixation à la structure porteuse.

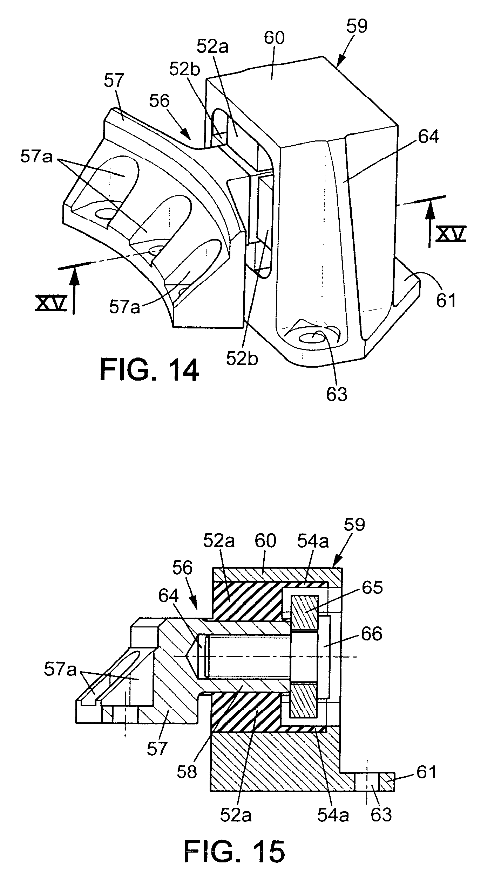

Cet exemple de module 4 comprend également une unique pièce rigide interne 56, comprenant une partie radiale interne 57 agencée en embase en arc de cercle, pour la fixation de la pièce 56 directement sur le bord d'un plateau porte-équipement en forme de disque circulaire, tel que le plateau 3 de la figure 1, mais sans bride radiale 3a, et, à cet effet, cette embase 57 présente trois logements 57a à fond percé, pour la réception de trois vis de fixation de la pièce 56 au plateau (voir figures 14 et 15). La pièce interne 56 comprend également une partie radiale externe 58, d'une seule pièce métallique avec la partie 57, et agencée en embout radial de forme externe en parallélépipède rectangle, avec un alésage radial borgne et taraudé 64, dans lequel se visse de manière réglable, une vis 66 de retenue et fixation, radialement à l'extérieur de l'embout radial 58, d'une butée rigide 65, métallique, de forme extérieure également en parallélépipède rectangle, mais aplatie et percée d'un orifice central de passage de la vis 66. La butée 65 est ainsi montée amovible et réglable radialement sur la pièce interne 56, et est donc interchangeable.

L'ensemble des plots d'isolation et des butées souples est constitué d'un unique élément en élastomère 51, qui a extérieurement la forme d'un manchon 54 de section sensiblement quadrangulaire, adhérisé ou vulcanisé par ses quatre faces latérales externes planes aux quatre faces internes planes du cadre 60 de la pièce externe 59, et dont l'épaisseur est suffisante pour que, dans sa partie radiale externe, entourant sans contact, au repos, la butée rigide 65, ce manchon 51 constitue les deux butées souples opposées longitudinales 54a et les deux butées souples opposées tangentielles 54b (voir figures 11 à 13 et 15), tandis que la partie radiale interne de ce manchon 54 est reliée par quatre blocs 52 parallélépipédiques, identiques et opposés deux à deux, à un manchon interne 53, également de section sensiblement quadrangulaire, plus mince que le manchon externe 54, et solidarisé par mécanisation ou adhérisation par ses quatre faces planes internes aux quatre faces latérales planes externe de l'embout radial 58, ainsi entouré et qui est engagé dans le cadre 60 de la pièce externe 59. Ainsi, les quatre blocs 52 d'élastomère reliant l'un à l'autre les manchons interne 53 et externe 54 constituent deux plots d'isolation opposés et longitudinaux 52a et deux plots d'isolation opposés et tangentiels 52b, comme représentés sur les figures 11 à 13 et 15, les coupes 12 et 15, d'une part, et la coupe 13, d'autre part, représentant plus particulièrement et respectivement les plots longitudinaux 52a et butées souples longitudinales 54a, d'une part, et d'autre part les plots tangentiels 52b et butées souples tangentielles 54b.

On comprend que l'interchangeabilité de la butée rigide 65 permet de régler les interstices fonctionnels entre deux de ses côtés opposés et les deux butées souples longitudinales 54a et entre ses deux autres côtés opposés et les deux butées souples tangentielles 54b. Cette interchangeabilité permet également d'ajuster l'épaisseur de cette butée 65, et son positionnement radial réglable par rapport à l'embout radial 58 permet de la positionner de manière appropriée par rapport aux butées souples 54a et 54b.

Le fonctionnement de ce dispositif est le même que celui des exemples précédents, et de même la réalisation des plots d'isolation et butées souples en élastomère peut être réalisée par moulage de l'élastomère, après traitement de surface des parties métalliques pour assurer l'adhérence élastomère-métal, entre les deux pièces interne 56 et externe 59, en utilisant des noyaux ou caches pour remplir les volumes ne devant pas être occupés par l'élastomère, notamment autour de la butée 65, et entre cette butée 65 et les quatre plots 52. Le montage amovible de cette butée 65 facilite le retrait de ces noyaux ou caches après le moulage de l'élastomère qui se fixe par vulcanisation sur les surfaces correspondantes et préparées des pièces rigides interne 56 et externe 59.

Dans cet exemple également, on constate que les bords de la butée rigide 65 constituent des bossages métalliques en vis-à-vis des butées souples 54a, 54b avec lesquelles ces bossages délimitent les interstices fonctionnels permettant le passage de la position de repos aux positions actives des butées souples, pour limiter et filtrer les vibrations de grande amplitude, tandis que les micro-vibrations sont atténuées et filtrées par les plots d'isolation 52a et 52b.

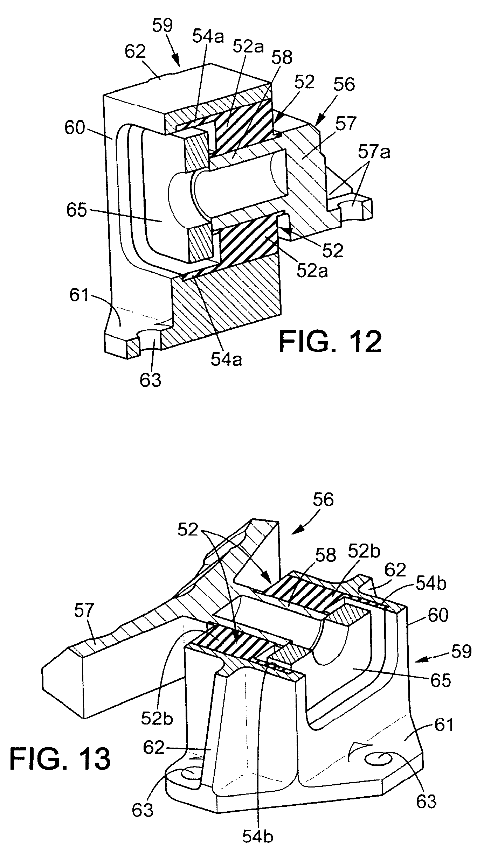

On peut noter également que dans une variante du dispositif (non représentée sur les figures 12 à 15), il n'y a pas de jonction entre les plots d'isolation et les butées souples (des noyaux pouvant être placés entre les deux), soit parce qu'on utilise des élastomères différents pour réaliser les plots et les butées, soit parce qu'on souhaite éviter d'éventuelles interactions dynamiques entre les plots et les butées.

Pour toutes ces variantes de réalisation de l'invention, la ou les formes des plots d'isolation 12 et 52 et/ou des butées souples 14, 24, 34, 44 et 54 peut ou peuvent être choisie(s) sans trop de contraintes, les formes préférées étant parallélépipédiques ou cylindriques pour des raisons de simplicité et de linéarité aux petits déplacements, mais des formes tronconiques ou pyramidales sont possibles. De même, chaque plot et/ou butée souple peut être monobloc en élastomère, ou lamifié(e), par exemple avec plusieurs couches d'élastomère de raideurs différentes, l'élastomère des plots et butées souples pouvant être le même, ou des élastomères différents.

Pour chacune de ces variantes, les caractéristiques des plots d'isolation tels que 12, en termes de section, hauteur, module viscoélastique, angles entre les plots longitudinaux 12a et le plan médian de la ou des pièce(s) interne(s) 6, angles entre l'axe radial des modules d'isolation et le plan de pose de l'équipement 2, sont choisis afin d'assurer que les fonctions fréquentielles de transmissibilité des efforts en force et couple selon les trois axes aux petits mouvements (en deçà du point de fonctionnement des butées souples telles que 14) correspondent à un gabarit spécifié, de sorte que, par exemple, les vibrations de faibles amplitudes en force et couple transmises par l'équipement 2 à la structure 5 du satellite soient correctement filtrées au-delà d'une fréquence donnée, et que les forces et couples utiles générés par l'équipement 2 soient transmis sans altération préjudiciable en deçà de cette fréquence donnée.

De même, les caractéristiques des butées souples, telles que 14, en termes de section et hauteur d'élastomère, module de viscoélasticité de l'élastomère, dimension de l'interstice entre l'élastomère de la butée souple et la pièce rigide en vis-à-vis au repos, sont choisies de telle sorte qu'une déformation trop importante des plots d'isolation, tels que 12, lors de fortes charges appliquées au dispositif est évitée, empêchant ainsi toute détérioration ou phénomène irréversible indésirable, et dans le même temps, les fonctions fréquentielles de transmissibilité des efforts en force et couple selon les trois axes dans toute la plage de fonctionnement prévue pour le dispositif correspondent à un gabarit spécifié, de sorte que les vibrations et chocs de grandes amplitudes en force et couple transmis par la structure 5 du satellite à l'équipement 2 soient correctement filtrés.

Il est à noter que, pour faciliter la fabrication des modules 4 d'isolation, il est très avantageux d'utiliser le même type d'élastomère pour les plots d'isolation 12, 52 et les butées souples 14, 24, 34, 44 et 54.

On peut également réaliser les pièces internes 6 ou 56 des modules 4 d'isolation de sorte que ces pièces fassent corps avec l'équipement 2 ou le plateau 3 porte-équipement, ce qui rend le dispositif moins modulaire, mais permet plus de compacité (spécification de volume allouable) et d'intégrabilité.

En cas de besoin, certaines au moins des réalisations du dispositif de l'invention permettent de procéder à différents réglages : interstice fonctionnel entre chaque butée souple et la partie en vis-à-vis de la ou d'une pièce rigide interne ou externe du module correspondant, cet interstice pouvant être différencié selon la direction longitudinale ou tangentielle, voir même selon les sens dans chaque direction, et/ou raideur des butées souples, par choix du ou des élastomère(s) et/ou de la structure des butées souples, qui peuvent aussi être différenciées selon les directions longitudinales et tangentielles, ou selon les sens de ces directions.

## Revendications

1. Dispositif (1) d'isolation multi-axes d'au moins un équipement (2) générateur de vibrations embarqué sur une structure porteuse (5), telle qu'un satellite, comprenant au moins trois modules (4) d'isolation répartis à la périphérie dudit équipement vibrant (2) ou d'un support (3) de ce dernier, chaque module (4) d'isolation comportant au moins deux pièces rigides (6, 9, 9a, 9b, 59) dont l'une au moins, dite pièce externe (9, 9a, 9b, 59), est destinée à être fixée (13) à la structure porteuse (5), et dont au moins une autre, dite pièce interne (6, 56), est destinée à être fixée (7a) audit équipement vibrant (2) ou à son support (3), au moins une pièce interne (6, 56) et au moins une pièce externe (9, 9a, 59) étant reliées l'une à l'autre par au moins un plot (12, 52) d'isolation en élastomère atténuant par sa déformation la transmission de vibrations de faible amplitude générées par ledit équipement (2), chaque module (4) comprenant également au moins deux butées souples (14, 24, 34, 44, 54) montées sur au moins une pièce interne (6, 56) ou au moins une pièce externe (9, 9b, 59), et ayant chacune une extrémité libre en vis-à-vis d'une autre pièce respectivement externe (9, 59) ou interne (6, 56) et sans contact avec ladite autre pièce au repos, chacune desdites au moins deux butées souples (14, 24, 34, 44, 54) agissant suivant au moins un axe de déformation dudit au moins un plot d'isolation (82, 52), et deux des butées souples, dites longitudinales (14a, 24a, 34a, 44a, 54a), étant actives suivant l'axe longitudinal (-ZZ), en sens opposés, **caractérisé en ce que** chaque module (4) d'isolation comprend de plus deux butées souples, dites tangentielles (14b, 24b, 34b, 44b, 54b), actives suivant l'axe tangentiel (-XX), en sens opposés.

2. Dispositif d'isolation selon la revendication 1, **caractérisé en ce que** lesdites butées souples (14a, 14b, 24a, 24b, 34a, 34b, 44a, 44b, 54a, 54b) desdits modules d'isolation (4) comprennent chacune au moins un élément en élastomère venant en contact avec ladite autre pièce rigide (9, 6, 56) en vis-à-vis, en position active de la butée souple correspondante.

3. Dispositif d'isolation selon la revendication 2, **caractérisé en ce que** ledit élément en élastomère (44, 51) d'au moins une butée souple (44a, 44b, 54a, 54b) d'au moins un module d'isolation (4) présente une extrémité libre en vis-à-vis de ladite autre pièce externe ou interne (6, 56), et sans contact au repos avec ladite autre pièce (6, 56), qui comporte une partie (8, 65) en vis-à-vis dudit élément en élastomère (44, 51) et constituée d'un bossage métallique de ladite autre pièce (6, 56).

4. Dispositif d'isolation selon l'une quelconque des revendications 1 à 3, **caractérisé en ce qu'**au moins un module d'isolation (4) comprend au moins un plot d'isolation, dit tangentiel (12b), monté sensiblement selon l'axe tangentiel (-XX), et/ou au moins un plot d'isolation, dit longitudinal (12a), monté sensiblement selon l'axe longitudinal (-ZZ).

5. Dispositif d'isolation selon l'une quelconque des revendications 1 à 4, **caractérisé en ce qu'**au moins un module d'isolation (4) comprend deux plots d'isolation longitudinaux (12a), de préférence identiques, montés sensiblement symétriquement de part et d'autre d'une pièce interne (6) dudit module (4) selon l'axe longitudinal (-ZZ), et/ou deux plots d'isolation tangentiels (12b), de préférence identiques, montés sensiblement symétriquement de part et d'autre d'une pièce interne (6) dudit module (4) selon l'axe tangentiel (-XX).

6. Dispositif d'isolation selon l'une quelconque des revendications 1 à 5, **caractérisé en ce que**, sur au moins un module (4), les deux butées souples longitudinales (14a), de préférence identiques, sont montées sensiblement symétriquement de part et d'autre d'une pièce interne (6) selon l'axe longitudinal (-ZZ), et les deux butées souples tangentielles (14b), de préférence identiques, sont montées sensiblement symétriquement de part et d'autre d'une pièce interne (6) selon l'axe tangentiel (-XX).

7. Dispositif d'isolation selon l'une quelconque des revendications 1 à 6, **caractérisé en ce que** l'ensemble des butées souples (24a, 24b, 34a, 34b, 44a, 44b, 54a, 54b) d'au moins un module est constitué d'un seul élément en élastomère (23, 34, 44, 51) fixé sur l'une (6, 9, 59) des pièces rigides interne(s) (6) et externe(s) (9, 59), en vis-à-vis d'une autre pièce rigide respectivement externe ou interne (6).

8. Dispositif d'isolation selon l'une quelconque des revendications 1 à 7, **caractérisé en ce que** l'ensemble des plots d'isolation (52a., 52b) et des butées souples (54a, 54b) d'au moins un module (4) est constitué d'un seul élément en élastomère (51).

9. Dispositif d'isolation selon l'une quelconque des revendications 1 à 8, **caractérisé en ce qu'**au moins un module (4) comprend deux pièces rigides externes (9a, 9b), dont l'une (9b) porte toutes les butées souples (14), et l'autre (9a) est reliée par ledit au moins un plot (12) d'isolation à la ou une pièce rigide interne (6) dudit module (4), la partie souple desdites butées souples étant fixée soit sur la face interne de ladite pièce rigide externe portant toutes les butées souples, soit sur la face externe de la ou une pièce rigide interne.

10. Dispositif d'isolation selon la revendication 9, **caractérisé en ce que** ladite pièce externe (9b) portant les butées souples (14) est fixée amoviblement (13) à ladite structure porteuse (5), en position radiale externe par rapport à l'autre pièce externe (9a) dudit module (4).

11. Dispositif d'isolation selon l'une quelconque des revendications 1 à 8, **caractérisé en ce que**, sur au moins un module (4), une première pièce interne (6) est fixée audit équipement vibrant (2) ou à son support (3), et liée par ledit au moins un plot d'isolation (12) à la ou une pièce externe (9) dudit module (4), et toutes les butées souples (14) sont portées par une deuxième pièce interne (15) fixée de manière amovible et réglable en position sur ladite première pièce interne (6), la partie souple desdites butées souples étant fixée soit sur la face interne de la ou une pièce externe, soit sur la face externe de ladite deuxième pièce rigide interne.

12. Dispositif d'isolation selon la revendication 11, **caractérisé en ce que** les butées souples (14) sont portées sur ou autour de l'extrémité radiale externe (15b) de ladite deuxième pièce interne (15) agencée en embout radial qui s'emmanche partiellement, amoviblement et avec un réglage radial, dans ladite première pièce interne (6) liée par ledit au moins un plot (12) à un cadre (10) d'une ou de l'unique pièce externe (9) dans laquelle s'engage radialement lesdites première (6) et deuxième (15) pièces internes.

13. Dispositif d'isolation selon l'une quelconque des revendications 1 à 8, **caractérisé en ce que**, sur au moins un module (4), les parties souples des butées souples (24a, 24b, 34a, 34b) sont fixées sur une même pièce interne (6) et constituées d'un seul élément en élastomère (24, 34), de section par exemple quadrangulaire ou circulaire, fixé sur ou autour d'une partie d'extrémité radiale externe (8), de forme générale respectivement parallélépipédique ou cylindrique de ladite pièce interne (6) et engagé, sans contact au repos, dans un cadre (10) de forme correspondante d'au moins une pièce externe (9).

14. Dispositif d'isolation selon l'une quelconque des revendications 1 à 8, **caractérisé en ce que**, sur au moins un module (4), les parties souples des butées souples (44a, 44b, 54a, 54b) sont fixées sur une même pièce externe (9, 59) et sont constituées d'un seul élément en élastomère (44, 54) en forme de manchon de section par exemple quadrangulaire ou circulaire fixé par sa face externe à l'intérieur d'un cadre (10, 60) de ladite pièce externe (9, 59), et entourant, sans contact au repos, une butée rigide (8, 65) de forme correspondante montée sur un embout radial (8, 58) d'une pièce interne (6, 56), en saillie radialement vers l'extérieur et engagé dans ledit cadre (10, 60) de la pièce externe (9, 59).

15. Dispositif d'isolation selon la revendication 14, **caractérisé en ce que** ladite butée rigide (65) est interchangeable, a une forme sensiblement parallélépipédique ou cylindrique et est fixée, de préférence de manière amovible et réglable, à l'extrémité radiale externe dudit embout radial (58) de la pièce interne (56).

16. Dispositif d'isolation selon l'une quelconque des revendications 1 à 15, **caractérisé en ce que** chacun des modules d'isolation (4) a son axe radial (-YY) incliné d'un même angle (α) par rapport au plan de pose de l'équipement vibrant (2) sur un plateau (3) porte-équipement dont sont solidaires les pièces internes (6) desdits modules (4).

17. Dispositif d'isolation selon l'une quelconques des revendications 1 à 16, **caractérisé en ce qu'**il comprend trois modules d'isolation (4) identiques.

18. Dispositif d'isolation selon l'une quelconque des revendications 1 à 16, **caractérisé en ce qu'**il comprend quatre modules (4) identiques, disposés de préférence aux sommets d'un carré et orientés de préférence de façon symétrique par rapport aux diagonales (D1, D2) du carré.

19. Dispositif d'isolation selon l'une quelconque des revendications 1 à 18, **caractérisé en ce que** les caractéristiques des plots d'isolation (12a, 12b), en termes de section, hauteur, module viscoélastique, angles entre les plots longitudinaux (12a) et le plan médian de la ou des pièce(s) interne(s) (6), angles entre l'axe radial (-YY) des modules d'isolation (4) et le plan de pose de l'équipement (2), sont choisis afin d'assurer que les fonctions fréquenltielles de transmissibilité des efforts en force et couple selon les trois axes aux petits mouvements, en deçà de la position active des butées souples (14a, 14b), correspondent à un gabarit spécifié, de sorte que, par exemple, les vibrations de faibles amplitudes en force et couple transmises par l'équipement (2) à la structure (5) porteuse soient correctement filtrées au-delà d'une certaine fréquence, et que les forces et couples utiles générés par l'équipement (2) soient transmis sans altération préjudiciable en deçà de ladite fréquence.

20. Dispositif d'isolation selon l'une quelconque des revendications 1 à 19, **caractérisé en ce que** les caractéristiques des butées souples (14a, 14b), en termes de section, hauteur d'élastomère, module viscoélastique de l'élastomère, dimension de l'interstice entre la butée souple (14a, 14b) et la pièce (6, 9) en vis-à-vis, sont telles qu'une déformation trop importante des plots d'isolation (12a, 12b) lors de fortes charges appliquées au dispositif (1) est évitée, empêchant ainsi toute détérioration ou phénomène irréversible indésirable, et simultanément, les fonctions fréquentielles de transmissibilité des efforts en force et couple selon les trois axes dans toute la plage de fonctionnement prévue pour le dispositif (1) correspondent à un gabarit spécifié, de sorte que les vibrations et chocs de grandes amplitudes en force et couple transmis par la structure porteuse (5) à l'équipement (2) soient correctement filtrés.

21. Application du dispositif d'isolation (1), selon l'une quelconque des revendications 1 à 20, **caractérisée en ce que** l'équipement (2) est un équipement spatial embarqué à bord d'un satellite, ledit équipement (2) comprenant au moins une partie tournante générant des vibrations, comme par exemple l'un au moins des équipements suivants : roue de réaction, roue cinétique, roue d'inertie, roue à stockage d'énergie, gyrodyne ou actionneur gyroscopique ou CMG, ledit équipement (2) muni de son dispositif (1) d'isolation devant résister aux charges statiques et dynamiques tels que vibrations, chocs, qu'il subit au lancement du satellite.

22. Application du dispositif d'isolation (1), selon l'une quelconque des revendications 1 à 20, **caractérisée en ce que** l'équipement (2) est un équipement spatial embarqué à bord d'un satellite, ledit équipement (2) comprenant au moins une partie animée en translation d'un mouvement comprenant au moins une composante temporelle périodique dans le temps générant des vibrations, comme par exemple un compresseur utilisé pour générer du froid, ledit équipement (2) muni de son dispositif (1) d'isolation devant résister aux charges statiques et dynamiques tels que vibrations, chocs qu'il subit au lancement du satellite.

23. Application selon l'une des revendications 21 et 22, **caractérisée en ce que** le dispositif (1) d'isolation sert à isoler un ensemble d'équipements dont un (2) au moins est perturbateur, tous montés sur un même plateau porte-équipements (3).

24. Application selon l'une quelconque des revendications 21 à 23, **caractérisée en ce que** le dispositif (1) d'isolation sert à isoler une partie d'un satellite, par exemple un module de service vis-à-vis d'une autre partie du satellite, par exemple une charge utile.

## Claims

1. A device (1) for the multi-axis insulation of at least one item of equipment (2) that generates vibrations on board a carrying structure (5), such as a satellite, comprising at least three insulation modules (4) distributed on the periphery of said item of vibrating equipment (2) or of a support (3) of the latter, each insulation module (4) comprising at least two rigid parts (6, 9, 9a, 9b, 59) at least one of which, called the outer part (9, 9a, 9b, 59) is designed to be attached (13) to the carrying structure (5), and of which at least one other, called the inner part (6, 56), is designed to be attached (7a) to said item of vibrating equipment (2) or to its support (3), at least one inner part (6, 56) and at least one outer part (9, 9a, 59) being connected to one another by at least one elastomer insulation pad (12, 52) attenuating by its deformation the transmission of low-amplitude vibrations generated by said item of equipment (2), each module (4) also comprising at least two flexible abutments (14, 24, 34, 44, 54) mounted on at least one inner part (6, 56) or on at least one outer part (9, 9b, 59), and each having a free end facing another respectively outer part (9, 59) or inner part (6, 56) and with no contact with said other part at rest, each of said at least two flexible abutments (14, 24, 34, 44, 54) acting on at least one axis of deformation of said at least one insulation pad (82, 52) and two of the flexible abutments, called longitudinal abutments (14a, 24a, 34a, 44a, 54a), being active on the longitudinal axis (-ZZ), in opposite directions, **characterized in that** each insulation module (4) also comprises two flexible abutments, called tangential abutments (14b, 24b, 34b, 44b, 54b), that are active on the tangential axis (-XX), in opposite directions.

2. The insulation device as claimed in claim 1, **characterized in that** said flexible abutments (14a, 14b, 24a, 24b, 34a, 34b, 44a, 44b, 54a, 54b) of said insulation modules (4) each comprise at least one elastomer element coming into contact with said other rigid part (9, 6, 56) facing it, in the active position of the corresponding flexible abutment.

3. The insulation device as claimed in claim 2, **characterized in that** said elastomer element (44, 51) of at least one flexible abutment (44a, 44b, 54a, 54b) of at least one insulation module (4) has a free end facing said other outer or inner part (6, 56), and with no contact at rest with said other part (6, 56), which comprises a portion (8, 65) facing said elastomer element (44, 51) and consisting of a metal boss of said other part (6, 56).

4. The insulation device as claimed in any one of claims 1 to 3, **characterized in that** at least one insulation module (4) comprises at least one insulation pad, called a tangential pad (12b), mounted substantially on the tangential axis (-XX), and/or at least one insulation pad, called a longitudinal pad (12a), mounted substantially on the longitudinal axis (-ZZ).

5. The insulation device as claimed in any one of claims 1 to 4, **characterized in that** at least one insulation module (4) comprises two longitudinal insulation pads (12a), preferably identical, mounted substantially symmetrically on either side of an inner part (6) of said module (4) on the longitudinal axis (-ZZ), and/or two tangential insulation pads (12b), preferably identical, mounted substantially symmetrically on either side of an inner part (6) of said module (4) on the tangential axis (-XX).

6. The insulation device as claimed in any one of claims 1 to 5, **characterized in that**, on at least one module (4), the two longitudinal flexible abutments (14a), preferably identical, are mounted substantially symmetrically on either side of an inner part (6) on the longitudinal axis (-ZZ), and the two tangential flexible abutments (14b), preferably identical, are mounted substantially symmetrically on either side of an inner part (6) on the tangential axis (-XX).

7. The insulation device as claimed in any one of claims 1 to 6, **characterized in that** all of the flexible abutments (24a, 24b, 34a, 34b, 44a, 44b, 54a, 54b) of at least one module consist of a single elastomer element (23, 34, 44, 51) attached to one (6, 9, 59) of the inner rigid part(s) (6) and outer rigid part(s) (9, 59), facing another respectively outer or inner rigid part (6).

8. The insulation device as claimed in any one of claims 1 to 7, **characterized in that** all of the insulation pads (52a, 52b) and of the flexible abutments (54a, 54b) of at least one module (4) consist of a single elastomer element (51).

9. The insulation device as claimed in any one of claims 1 to 8, **characterized in that** at least one module (4) comprises two outer rigid parts (9a, 9b), of which one (9b) supports all the flexible abutments (14), and the other (9a) is connected by said at least one insulation pad (12) to the or one inner rigid part (6) of said module (4), the flexible portion of said flexible abutments being attached either to the inner face of said outer rigid part supporting all the flexible abutments, or to the outer face of the or one inner rigid part.

10. The insulation device as claimed in claim 9, **characterized in that** said outer part (9b) supporting the flexible abutments (14) is removably attached (13) to said carrying structure (5), in an outer radial position relative to the other outer part (9a) of said module (4).

11. The insulation device as claimed in any one of claims 1 to 8, **characterized in that**, on at least one module (4), a first inner part (6) is attached to said item of vibrating equipment (2) or to its support (3), and is linked via said at least one insulation pad (12) to the or one outer part (9) of said module (4), and all the flexible abutments (14) are supported by a second inner part (15) attached in a removable and positionally adjustable manner to said first inner part (6), the flexible portion of said flexible abutments being attached either to the inner face of the or one outer part, or to the outer face of said second inner rigid part.

12. The insulation device as claimed in claim 11, **characterized in that** the flexible abutments (14) are supported on or about the outer radial end (15b) of said second inner part (15) arranged as a radial end-piece which partially fits, removably and with a radial adjustment, in said first inner part (6) linked via said at least one pad (12) to a frame (10) of one or of the only outer part (9) in which said first inner part (6) and second inner part (15) are engaged radially.

13. The insulation device as claimed in any one of claims 1 to 8, **characterized in that**, on at least one module (4), the flexible portions of the flexible abutments (24a, 24b, 34a, 34b) are attached to one and the same inner part (6) and consist of a single elastomer element (24, 34), with a section that is for example quadrangular or circular, attached to or about an outer radial end portion (8), with a general shape that is respectively parallelepipedal or cylindrical, of said inner part (6) and engaged, without contact at rest, in a frame (10) of matching shape of at least one outer part (9).

14. The insulation device as claimed in any one of claims 1 to 8, **characterized in that**, on at least one module (4), the flexible portions of the flexible abutments (44a, 44b, 54a, 54b) are attached to one and the same outer part (9, 59) and consist of a single elastomer element (44, 54) in the shape of a sleeve with a section that is for example quadrangular or circular attached via its outer face to the inside of a frame (10, 60) of said outer part (9, 59), and surrounding, without contact at rest, a rigid abutment (8, 65) of matching shape mounted on a radial end-piece (8, 58) of an inner part (6, 56), protruding radially outward and engaged in said frame (10, 60) of the outer part (9, 59).

15. The insulation device as claimed in claim 14, **characterized in that** said rigid abutment (65) is interchangeable, has a substantially parallelepipedal or cylindrical shape and is attached, preferably in a removable and adjustable manner, to the outer radial end of said radial end-piece (58) of the inner part (56).

16. The insulation device as claimed in any one of claims 1 to 15, **characterized in that** each of the insulation modules (4) has its radial axis (-YY) inclined at one and the same angle (α) relative to the plane of installation of the item of vibrating equipment (2) on an equipment-holding table (3) to which the inner parts (6) of said modules (4) are secured.

17. The insulation device as claimed in any one of claims 1 to 16, **characterized in that** it comprises three identical insulation modules (4).

18. The insulation device as claimed in any one of claims 1 to 16, **characterized in that** it comprises four identical modules (4) preferably placed at the apexes of a square and preferably oriented symmetrically relative to the diagonals (D1, D2) of the square.

19. The insulation device as claimed in any one of claims 1 to 18, **characterized in that** the characteristics of the insulation pads (12a, 12b), in terms of section, height, viscoelastic modulus, angles between the longitudinal pads (12a) and the mid-plane of the inner part(s) (6), angles between the radial axis (-YY) of the insulation modules (4) and the plane of installation of the item of equipment (2), are chosen in order to ensure that the frequency functions of transmissibility of the stresses in force and torque on the three axes for the small movements, below the active position of the flexible abutments (14a, 14b), correspond to a specified template, so that, for example, the low-amplitude vibrations in force and torque transmitted by the item of equipment (2) to the carrying structure (5) are correctly filtered beyond a certain frequency, and that the effective forces and torques generated by the item of equipment (2) are transmitted without harmful deterioration below said frequency.

20. The insulation device as claimed in any one of claims 1 to 19, **characterized in that** the characteristics of the flexible abutments (14a, 14b), in terms of section, height of elastomer, viscoelastic modulus of the elastomer, dimension of the interstice between the flexible abutment (14a, 14b) and the facing part (6, 9), are such that too great a deformation of the insulation pads (12a, 12b) during heavy loads applied to the device (1) is avoided, thus preventing any damage or undesirable irreversible phenomenon, and simultaneously, the frequency functions of transmissibility of the stresses in force and torque on the three axes in the whole range of operation predicted for the device (1) correspond to a specified template, so that the vibrations and impacts of great amplitudes in force and torque transmitted by the carrying structure (5) to the item of equipment (2) are correctly filtered.

21. An application of the insulation device (1), as claimed in any one of claims 1 to 20, **characterized in that** the item of equipment (2) is an item of space equipment on board a satellite, said item of equipment (2) comprising at least one rotating portion generating vibrations, such as for example at least one of the following items of equipment: reaction wheel, kinetic wheel, momentum wheel, energy-storage wheel, gyrodyne or gyroscopic actuator or CMG, said item of equipment (2) furnished with its insulation device (1) having to withstand static and dynamic loads such as vibrations, impacts, which it sustains on launch of the satellite.

22. The application of the insulation device (1), as claimed in any one of claims 1 to 20, **characterized in that** the item of equipment (2) is an item of space equipment on board a satellite, said item of equipment (2) comprising at least one portion actuated in translation with a movement comprising at least one periodic time component over time generating vibrations, such as for example a compressor used to generate cooler, said item of equipment (2) furnished with its insulation device (1) having to withstand the static and dynamic loads such as vibrations, impacts, that it sustains on launch of the satellite.

23. The application as claimed in one of claims 21 and 22, **characterized in that** the insulation device (1) is used to insulate a set of items of equipment at least one item (2) of which is disruptive, all mounted on one and the same equipment-holding table (3).

24. The application as claimed in any one of claims 21 to 23, **characterized in that** the insulation device (1) is used to insulate a portion of a satellite, for example a service module with respect to another portion of the satellite, for example a payload.

## Patentansprüche

1. Vorrichtung (1) zur Mehrfachachsenisolation wenigstens einer vibrationserzeugenden Ausrüstungsvorrichtung (2) an Bord einer Trägerstruktur (5), wie etwa eines Satelliten, umfassend wenigstens drei Isolationsmodule (4), welche an dem Umfang der vibrierenden Ausrüstungsvorrichtung (2) oder eines Trägers (3) der Ausrüstungsvorrichtung verteilt angeordnet sind, wobei jedes Isolationsmodul (4) wenigstens zwei starre Teile (6, 9, 9a, 9b, 59) umfasst, wobei wenigstens eines davon, welches Außenteil (9, 9a, 9b, 59) genannt wird, dazu bestimmt ist, an der Trägerstruktur (5) befestigt (13) zu sein, und wobei wenigstens ein anderes davon, welches Innenteil (6, 56) genannt wird, dazu bestimmt ist, an der vibrierenden Ausrüstungsvorrichtung (2) oder an ihrem Träger (3) befestigt (7a) zu sein, wobei wenigstens ein Innenteil (6, 56) und wenigstens ein Außenteil (9, 9a, 59) miteinander durch wenigstens einen Isolationskontakt (12, 52) aus einem Elastomermaterial verbunden sind, welcher durch seine Verformung die Übertragung von durch die Ausrüstungsvorrichtung (2) erzeugten Vibrationen geringer Amplitude abschwächt, wobei jedes Modul (4) auch wenigstens zwei flexible Anschlagvorrichtungen (14, 24, 34, 44, 54) umfasst, welche an wenigstens einem Innenteil (6, 56) oder wenigstens einem Außenteil (9, 9b, 59) montiert sind und jeweils ein freies Ende einem anderen Außenteil (9, 59) bzw. Innenteil (6, 56) gegenüberliegend aufweisen, welches mit dem anderen Teil im Ruhezustand nicht in Kontakt steht, wobei jede der wenigstens zwei flexiblen Anschlagvorrichtungen (14, 24, 34, 44, 54) entlang wenigstens einer Deformationsachse des wenigstens einen Isolationskontakts (82, 52) wirkt, und wobei zwei der flexiblen Anschlagvorrichtungen, welche longitudinale Anschlagvorrichtungen (14a, 24a, 34a, 44a, 54a) genannt werden, entlang der longitudinalen Achse (-ZZ) in entgegengesetzten Richtungen wirken, **dadurch gekennzeichnet, dass** jedes Isolationsmodul (4) ferner zwei flexible Anschlagvorrichtungen umfasst, welche tangentiale Anschlagvorrichtungen (14b, 24b, 34b, 44b, 54b) genannt werden und welche entlang der tangentialen Achse (-XX) in entgegengesetzten Richtungen wirken.

2. Isolationsvorrichtung nach Anspruch 1, **dadurch gekennzeichnet, dass** die flexiblen Anschlagvorrichtungen (14a, 14b, 24a, 24b, 34a, 34b, 44a, 44b, 54a, 54b) der Isolationsmodule (4) jeweils wenigstens ein Element aus einem Elastomermaterial umfassen, wobei das Element in Wirkposition der entsprechenden flexiblen Anschlagvorrichtung in Kontakt mit dem anderen starren gegenüberliegenden Teil (9, 6, 56) gelangt.

3. Isolationsvorrichtung nach Anspruch 2, **dadurch gekennzeichnet, dass** das Elastomerelement (44, 51) von wenigstens einer flexiblen Anschlagvorrichtung (44a, 44b, 54a, 54b) wenigstens eines Isolationsmoduls (4) ein freies Ende aufweist, welches dem anderen Außen- bzw. Innenteil (6, 56) gegenüberliegt und im Ruhezustand nicht mit dem anderen Teil (6, 56) in Kontakt steht, welches einen Abschnitt (8, 65) umfasst, der dem Elastomerelement (44, 51) gegenüberliegt und von einem metallischen Vorsprung des anderen Teils (6, 56) gebildet ist.

4. Isolationsvorrichtung nach einem der Ansprüche 1 bis 3, **dadurch gekennzeichnet, dass** wenigstens ein Isolationsmodul (4) wenigstens einen Isolationskontakt, welcher tangentialer Isolationskontakt (12b) genannt wird und im Wesentlichen entlang der tangentialen Achse (-XX) montiert ist, oder/und wenigstens einen Isolationskontakt umfasst, der longitudinaler Isolationskontakt (12a) genannt wird und im Wesentlichen entlang der longitudinalen Achse (-ZZ) montiert ist.

5. Isolationsvorrichtung nach einem der Ansprüche 1 bis 4, **dadurch gekennzeichnet, dass** wenigstens ein Isolationsmodul (4) zwei longitudinale Isolationskontakte (12a), welche vorzugsweise identisch sind und im Wesentlichen symmetrisch beidseitig von einem Innenteil (6) des Moduls (4) entlang der longitudinalen Achse (-ZZ) montiert sind, oder/und zwei tangentiale Isolationskontakte (12b) umfasst, welche vorzugsweise identisch sind und im Wesentlichen symmetrisch beidseitig von einem Innenteil (6) des Moduls (4) entlang der tangentialen Achse (-XX) montiert sind.

6. Isolationsvorrichtung nach einem der Ansprüche 1 bis 5, **dadurch gekennzeichnet, dass** an wenigstens einem Modul (4) die beiden flexiblen longitudinalen Anschlagvorrichtungen (14a), welche vorzugsweise identisch sind, im Wesentlichen symmetrisch beidseitig von einem Innenteil (6) entlang der longitudinalen Achse (-ZZ) montiert sind und dass die beiden flexiblen tangentialen Anschlagvorrichtungen (14b), welche vorzugsweise identisch sind, im Wesentlichen symmetrisch beidseitig von einem Innenteil (6) entlang der tangentialen Achse (-XX) montiert sind.

7. Isolationsvorrichtung nach einem der Ansprüche 1 bis 6, **dadurch gekennzeichnet, dass** die Menge der flexiblen Anschlagvorrichtungen (24a, 24b, 34a, 34b, 44a, 44b, 54a, 54b) von wenigstens einem Modul aus einem einzigen Element aus einem Elastomermaterial (23, 34, 44, 51) gebildet ist, welches an dem einem (6, 9, 59) der starren Innen- (6) und Außenteile (9, 59) bzw. an einem von dem starren Innenteil (6) und dem starren Außenteil (9, 59) gegenüber von einem anderen starren Außen- bzw. Innenteil (6) befestigt ist.

8. Isolationsvorrichtung nach einem der Ansprüche 1 bis 7, **dadurch gekennzeichnet, dass** die Menge der Isolationskontakte (52a, 52b) und der flexiblen Anschlagvorrichtungen (54a, 54b) von wenigstens einem Modul (4) aus einem einzigen Element aus einem Elastomermaterial (51) gebildet ist.

9. Isolationsvorrichtung nach einem der Ansprüche 1 bis 8, **dadurch gekennzeichnet, dass** wenigstens ein Modul (4) zwei starre Außenteile (9a, 9b) aufweist, von denen eines (9b) alle flexiblen Anschlagvorrichtungen (14) trägt und das andere (9a) durch den wenigstens einen Isolationskontakt (12) mit dem oder einem starren Innenteil (6) des Moduls (4) verbunden ist, wobei der flexible Abschnitt der flexiblen Anschlagvorrichtungen entweder an der Innenseite des starren Außenteils, welches alle flexiblen Anschlagvorrichtungen trägt, oder an der Außenseite des oder eines starren Innenteils befestigt ist.

10. Isolationsvorrichtung nach Anspruch 9, **dadurch gekennzeichnet, dass** das Außenteil (9b), welches die flexiblen Anschlagvorrichtungen (14) trägt, ablösbar (13) an der Trägerstruktur (5) in radialer Außenposition in Bezug auf das andere Außenteil (9a) des Moduls (4) befestigt ist.

11. Isolationsvorrichtung nach einem der Ansprüche 1 bis 8, **dadurch gekennzeichnet, dass** an wenigstens einem Modul (4) ein erstes Innenteil (6) an der vibrierenden Ausrüstungsvorrichtung (2) oder an ihrem Träger (3) befestigt ist und durch den wenigstens einen Isolationskontakt (12) mit dem oder einem Außenteil (9) des Moduls (4) verbunden ist, und wobei alle flexiblen Anschlagvorrichtungen (14) durch ein zweites Innenteil (15) getragen sind, welches in ablösbarer Weise und positionsverstellbar an dem ersten Innenteil (6) befestigt ist, wobei der flexible Abschnitt der flexiblen Anschlagvorrichtungen entweder an der Innenseite des oder eines Außenteils oder an der Außenseite des zweiten starren Innenteils befestigt ist.

12. Isolationsvorrichtung nach Anspruch 11, **dadurch gekennzeichnet, dass** die flexiblen Anschlagvorrichtungen (14) an einem oder um ein radiales Außenende (15b) des zweiten Innenteils (15) herum gestützt sind, das als radiales Endteil angeordnet ist, welches ablösbar und mit radialer Einstellbarkeit teilweise in das erste Innenteil (6) eingesetzt ist, das durch den wenigsten einen Kontakt (12) mit einem Rahmen (10) von einem oder dem einzigen Außenteil (9) verbunden ist, in welchen radial das erste (6) und das zweite (15) Innenteil eingreifen.

13. Isolationsvorrichtung nach einem der Ansprüche 1 bis 8, **dadurch gekennzeichnet, dass** an wenigstens einem Modul (4) die flexiblen Abschnitte der flexiblen Anschlagvorrichtungen (24a, 24b, 34a, 34b) an demselben Innenteil (6) befestigt sind und aus einem einzigen Element aus einem Elastomermaterial (24, 34) gebildet sind, welches beispielsweise einen rechtwinkligen oder kreisförmigen Schnitt aufweist und an oder um einen radialen äußeren Endabschnitt (8) herum befestigt ist, mit einer allgemeinen Parallelepipedform oder einer zylindrischen Form des Innenteils (6), und im Ruhezustand kontaktfrei in einen Rahmen (10) mit einer entsprechenden Form von wenigstens einem Außenteil (9) eingreift.

14. Isolationsvorrichtung nach einem der Ansprüche 1 bis 8, **dadurch gekennzeichnet, dass** an wenigstens einem Modul (4) die flexiblen Abschnitte der flexiblen Anschlagvorrichtungen (44a, 44b, 54a, 54b) an demselben Außenteil (9, 59) befestigt sind und aus einem einzigen Element aus einem Elastomermaterial (44, 54) gebildet sind, welches die Form einer Hülse mit einem beispielsweise rechtwinkligen oder kreisförmigen Schnitt aufweist, die mit ihrer Außenseite an dem Inneren eines Rahmens (10, 60) des Außenteils (9, 59) befestigt ist und im Ruhezustand kontaktfrei eine starre Anschlagvorrichtung (8, 65) mit einer entsprechenden Form umgibt, welche an einem radialen Ansatz (8, 58) eines Innenteils (6, 56) radial nach außen hin vorstehend und in den Rahmen (10, 60) des Außenteils (9, 59) eingreifend befestigt ist.

15. Isolationsvorrichtung nach Anspruch 14, **dadurch gekennzeichnet, dass** die starre Anschlagvorrichtung (65) austauschbar ist, im Wesentlichen eine Parallelepipedform oder eine zylindrische Form aufweist und in vorzugsweise ablösbarer und einstellbarer Weise an dem radialen äußeren Ende des radialen Ansatzes (58) des Innenteils (56) befestigt ist.

16. Isolationsvorrichtung nach einem der Ansprüche 1 bis 15, **dadurch gekennzeichnet, dass** die radiale Achse (-YY) jedes der Isolationsmodule (4) mit demselben Winkel (a) in Bezug auf die Lagerebene der vibrierenden Ausrüstungsvorrichtung (2) auf einer Ausrüstungsvorrichtungsstützplatte (3) geneigt ist, mit welcher die Innenteile (6) der Module (4) verbunden sind.

17. Isolationsvorrichtung nach einem der Ansprüche 1 bis 16, **dadurch gekennzeichnet, dass** sie drei identische Isolationsmodule (4) umfasst.

18. Isolationsvorrichtung nach einem der Ansprüche 1 bis 16, **dadurch gekennzeichnet, dass** sie vier identische Isolationsmodule (4) umfasst, welche vorzugsweise an den Ecken eines Vierecks angeordnet sind und vorzugsweise symmetrisch in Bezug auf die Diagonalen (D1, D2) des Vierecks ausgerichtet sind.

19. Isolationsvorrichtung nach einem der Ansprüche 1 bis 18, **dadurch gekennzeichnet, dass** die Eigenschaften der Isolationskontakte (12a, 12b) in Bezug auf einen Schnitt, eine Höhe, ein Viskoelastizitätmodul, Winkel zwischen den longitudinalen Kontakten (12a) und der Mittelebene des oder der Innenteile (6), Winkel zwischen der radialen Achse (-YY) der Isolationsmodule (4) und der Ausrüstungsvorrichtungsstützebene (2) gewählt sind, um sicherzustellen, dass die Frequenzfunktionen einer Übertragbarkeit von Kraft- und Drehmomentbelastungen entlang der drei Achsen bei kleinen Bewegungen unterhalb der Wirkposition der flexiblen Anschlagvorrichtungen (14a, 14b) einem bestimmten Maß derart entsprechen, dass beispielsweise Vibrationen geringer Amplituden einer Kraft oder eines Drehmoments, welche durch die Ausrüstungsvorrichtung (2) auf die Trägerstruktur übertragen werden, jenseits einer bestimmten Frequenz korrekt gefiltert werden, und dass die Nutzkräfte und - drehmomente, welche durch die Ausrüstungsvorrichtung (2) erzeugt werden, unterhalb der Frequenz ohne nachteilige Änderung übertragen werden.

20. Isolationsvorrichtung nach einem der Ansprüche 1 bis 19, **dadurch gekennzeichnet, dass** die Eigenschaften der flexiblen Anschlagvorrichtungen (14a, 14b) in Bezug auf einen Schnitt, eine Elastomerhöhe, ein Viskoelastizitätsmodul des Elastomers, ein Abmaß des Zwischenraums zwischen dem flexiblen Anschlag (14a, 14b) und dem gegenüberliegenden Teil (6, 9) derart sind, dass eine zu starke Deformation der Isolationskontakte (12a, 12b) bei starken auf die Vorrichtung (1) angewandten Belastungen vermieden wird, wodurch jede Verschlechterung oder jede unerwünschte irreversible Erscheinung verhindert wird, und wobei gleichzeitig die Frequenzfunktionen einer Übertragbarkeit der Kraft- und Drehmomentbelastungen entlang der drei Achsen in dem gesamten für die Vorrichtung (1) vorgesehenen Funktionsbereich einem bestimmten Maß derart entsprechen, dass die Vibrationen und Stöße großer Amplituden einer Kraft oder eines Drehmoments, die bzw. das durch die Trägerstruktur (5) auf die Ausrüstungsvorrichtung (2) übertragen wird, korrekt gefiltert werden.

21. Verwendung der Isolationsvorrichtung (1) nach einem der Ansprüche 1 bis 20, **dadurch gekennzeichnet, dass** die Ausrüstungsvorrichtung (2) eine Raumausrüstungsvorrichtung ist, welche sich an Bord eines Satelliten befindet, wobei die Ausrüstungsvorrichtung (2) wenigstens einen sich drehenden, Vibrationen erzeugenden Abschnitt umfasst, wie beispielsweise wenigstens eine der folgenden Ausrüstungsvorrichtungen: Reaktionsrad, Schwungrad, Trägheitsrad, Energiespeicherrad, Gyrodyne oder Gyroskopstellglied oder CMG, wobei die mit ihrer Isolationsvorrichtung (1) bereitgestellte Ausrüstungsvorrichtung (2) statischen und dynamischen Belastungen, wie etwa Vibrationen und Stößen, widerstehen muss, welchen sie beim Start bzw. In-den-Orbit-Bringen des Satelliten ausgesetzt ist.

22. Verwendung der Isolationsvorrichtung (1) nach einem der Ansprüche 1 bis 20, **dadurch gekennzeichnet, dass** die Ausrüstungsvorrichtung (2) eine Raumausrüstungsvorrichtung ist, welche sich an Bord eines Satelliten befindet, wobei die Ausrüstungsvorrichtung (2) wenigstens einen Abschnitt umfasst, welcher translativ mit einer Bewegung angetrieben wird, welche wenigstens eine zeitlich periodische Zeitkomponente unter Erzeugung von Vibrationen umfasst, wie beispielsweise einen zum Erzeugen von Kühlung verwendeten Verdichter, wobei die mit ihrer Isolationsvorrichtung ausgestattete Ausrüstungsvorrichtung (2) statischen und dynamischen Belastungen widerstehen muss, wie etwa Vibrationen und Stößen, denen sie beim Start bzw. In-den-Orbit-Bringen des Satelliten ausgesetzt ist.

23. Verwendung nach einem der Ansprüche 21 und 22, **dadurch gekennzeichnet, dass** die Isolationsvorrichtung (1) dazu dient, eine Anordnung von Ausrüstungsvorrichtungen zu isolieren, von welchen wenigstens eine (2) eine Perturbationsvorrichtung ist, wobei alle Ausrüstungsvorrichtungen auf derselben Ausrüstungsvorrichtungsstützplatte (3) montiert sind.

24. Verwendung nach einem der Ansprüche 21 bis 23, **dadurch gekennzeichnet, dass** die Isolationsvorrichtung (1) dazu dient, einen Abschnitt eines Satelliten zu isolieren, beispielsweise ein Servicemodul, welches einem anderen Abschnitt des Satelliten gegenüberliegt, beispielsweise einer Nutzlast.
